(19) **Europäisches Patentamt**
**European Patent Office**
**Office européen des brevets**

(11) **EP 1 855 423 B1**

(12) **EUROPEAN PATENT SPECIFICATION**

(45) Date of publication and mention
of the grant of the patent:
**18.12.2013 Bulletin 2013/51**

(51) Int Cl.:
***H04L 12/70*** *(2013.01)*    ***H04W 12/10*** *(2009.01)*

(21) Application number: **06009847.2**

(22) Date of filing: **12.05.2006**

(54) **Decentralized multi-user link adaptation for QoS support**

Dezentralisierte Anpassung einer Multi-User-Verbingung für die Unterstützung von Dienstqualität (QoS)

Adaptation décentralisée de liaison à multi utilisateurs pour le support de qualité de service (QoS)

(84) Designated Contracting States:
**DE GB**

(43) Date of publication of application:
**14.11.2007 Bulletin 2007/46**

(73) Proprietor: **NTT DoCoMo, Inc.**
**Chiyoda-Ku**
**Tokyo 100-6150 (JP)**

(72) Inventors:
• **Omiyi, Peter**
**28759 Bremen (DE)**
• **Haas, Harald**
**28755 Bremen (DE)**
• **Auer, Gunther, Dr.**
**80339 München (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
**EP-A- 1 289 179    EP-A- 1 526 685**
**EP-A- 1 628 446**

• **OMIYI P E ET AL: "Maximising spectral efficiency in 4th generation OFDM/TDMA TDD hybrid cellular mobile/ad-hoc wireless communications" VEHICULAR TECHNOLOGY CONFERENCE, 2004. VTC 2004-SPRING. 2004 IEEE 59TH MILAN, ITALY 17-19 MAY 2004, PISCATAWAY, NJ, USA,IEEE, US, vol. 4, 17 May 2004 (2004-05-17), pages 2052-2056, XP010766523 ISBN: 0-7803-8255-2**

**Description**

The present invention is in the field of cellular, ad hoc, and multi-hop multi-carrier and single-carrier TDD based networks, and it addresses link adaptation, interference avoidance, interference mitigation and interference management, as well as medium access control and quality of service support for multi-user access.

Unlike spread spectrum techniques, multi carrier and single carrier transmission systems do not have an in-build interference resistance mechanism, which would enable them to be used in multiple cell environments such that universal frequency reuse would be possible. The issue of an intelligent frequency reuse in order to effectively combat co-channel interference (CCI) is an open problem. Furthermore, the lack of a centralized node in ad hoc or multi-hop networks raises the problem that radio resource management (e.g. time and frequency management) cannot be done in a centralized manner. Therefore, the radio resource management in ad hoc or multi-hop networks is another open problem.

A known protocol that is used in multi-hop and ad hoc networks for efficient radio resource management is the so-called busy burst time division multiple access protocol (BB-TDMA). BB-TDMA is a busy burst broadcast protocol utilizing the properties of time division duplex (TDD) to support efficient interference management. A network node, which is currently receiving data, broadcasts a busy burst to prevent potential interferers from transmitting concurrently. A potential transmitter, would only start a transmission if the busy burst is received below a certain threshold. The busy burst is broadcast in mini slots or busy signal time slots, which occupy a portion of the time  frame structure, with one busy signal time slot being associated with each payload signal time slot. Every transmitter must listen to the busy signal to determine, if it can transmit as scheduled or not without causing significant interference to other users.

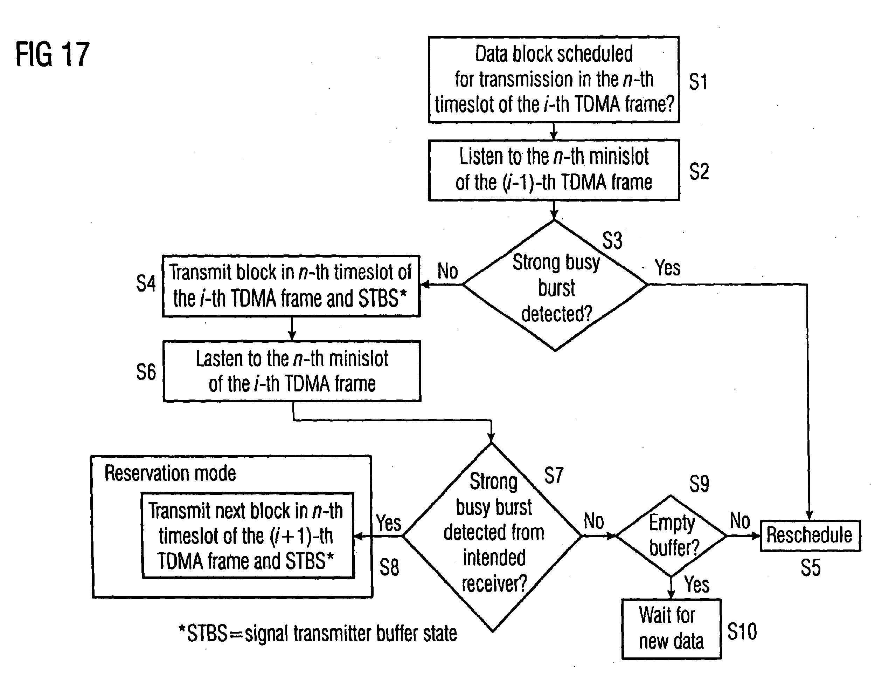

A conventional BB-TDMA transmitter can be in two different modes, the so-called contention mode and the reservation mode. A conventional transmitter following the BB-TDMA protocol, is in a contention mode if there is payload data available for transmission during a radio frame, but the transmitter has not accessed the system yet. Therefore, the transmitter attempts to allocate resources, i.e. a payload signal time slot, in order to start transmission. In Fig. 17 a flowchart of a BB-TDMA transmitter in contention mode is depicted.

In a first step S1 a data block is scheduled for transmission in the n-th time slot of the i-th TDMA frame. Once a data block has been scheduled the transceiver will start to listen to the n-th mini slot, i.e. the busy signal time slot, of the (i-1)-th TDMA frame in a second step S2. In a third step S3, there are two possibilities, either the transmitter has received a strong busy burst, then the desired n-th time slot is already occupied and the data block has to be rescheduled, indicated by step S5 in the flowchart in Fig. 17. If the transmitter does not detect a strong busy burst in step S3, then this indicates that the desired n-th time slot is not occupied and the transmitter can start a transmission in step S4 and transmit the data block in the n-th time slot of the i-th TDMA frame. It would also signal the transmitter buffer state to let the receiver know, how many data the transmitter is planning to transmit. After the transmitter has transmitted its first data block it will listen in a step S6 to the n-th busy signal time slot of the i-th TDMA frame. Again, there are two possibilities for the n-th busy signal time slot, if the transmitter detects a strong busy burst from the  intended receiver the transmitter follows on in step S8 and transmits the next block in the n-th time slot of the i+1 TDMA frame, and signals again its transmitter buffer state. If the transmitter was not able to detect a strong busy burst from the intended receiver in step S7, but it has still data in its buffer, then the transmission has to be rescheduled corresponding to step S5, which is similar to the situation when a strong busy burst was detected in step S3, where the transmitter was trying to find an available payload time slot. However, if the transmitter buffer is empty, i.e. there is no more data to transmit, then the transmission is completed and the transmitter can wait for new data as indicated in the step S10 in Fig. 17. Clearly, the reception of a busy burst after a first data block has been transmitted serves as an acknowledgement for the transmitter and also for a protection of transmissions from other transmitters, which receive the busy burst in the busy signal time slot associated with that particular payload time slot, and once they detect a busy burst they would reschedule their transmissions and neither access nor interfere the transmission of the desired transmitter. Looking at the transmitter, the busy burst serves as an acknowledgement for the transmission of the first data block and brings the transmitter in a second state, the so-called reservation mode. The reservation mode corresponds to step S8 in Fig. 17, where the transmission of the first data block was successfully acknowledged and the transmitter carries on with the transmission.

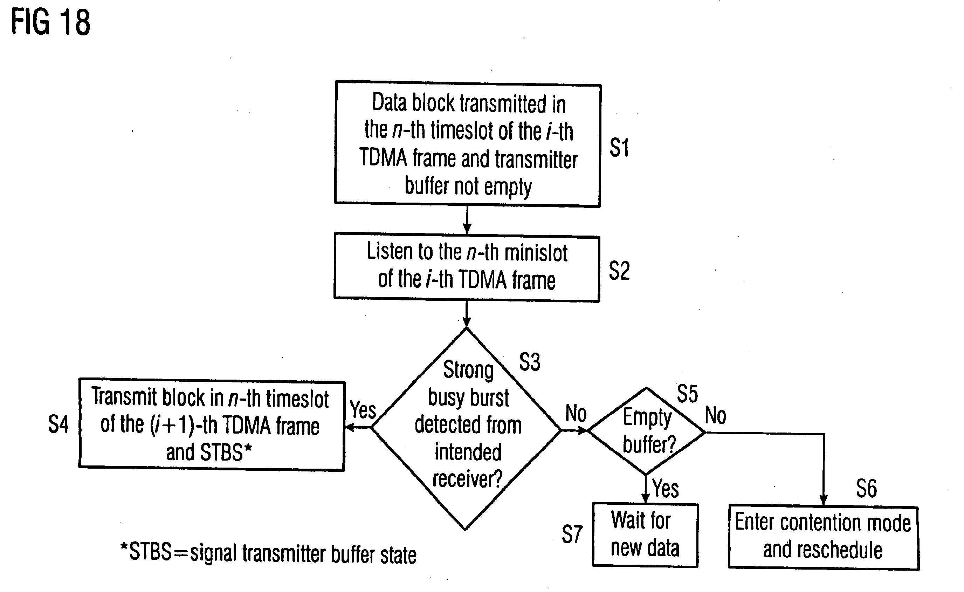

A flowchart of the behavior of a transmitter in reservation mode according to step S8 of Fig. 17 is displayed in Fig. 18. The first step S1 of the flowchart corresponds to the situation where a data block has been transmitted and acknowledged in the n-th time slot of the i-th TDMA frame and the transmitter buffer is not empty yet. The transmitter would then transmit the next data block and listen to the n-th minislot of the i-th TDMA-frame in a step S2, upon which it can either detect a strong busy  burst in the n-th mini slot or busy signal time slot or not, according to step S3 in Fig. 18. If it detects a strong busy burst from the intended receiver in step S3 it would carry on transmitting and transmit another data block in the n-th time slot of the i+1 TDMA frame, also signaling its transmitter buffer state. The transmitter then stays in reservation mode and carries on transmitting data for as long as it detects strong busy bursts in the associated busy signal time slot from the intended receiver. If at some point it does not detect a strong busy burst from the intended receiver in step S3, then there are two possibilities. If its transmitter buffers are empty then the transmission is completed and the transmitter can go back into contention mode and wait for new data. If the buffers are not empty, then not detecting a strong busy burst from the intended receiver serves as a negative acknowledgement of the last transmission and the transmitter reverts back into contention mode, which is indicated in step S6 in Fig. 18 and reschedules the last transmission. From the Figs. 17 and 18 it can be seen that a transmitter is only in contention mode for initial transmissions or retransmissions, if it succeeds in transmitting a data block in contention mode, it immediately changes to reservation mode, staying for as long as it continuously transmits data blocks successfully. If either its buffers are empty or a successful reception of the data block is not acknowledged by the receiver transmitting a busy burst, it reverts into contention mode.

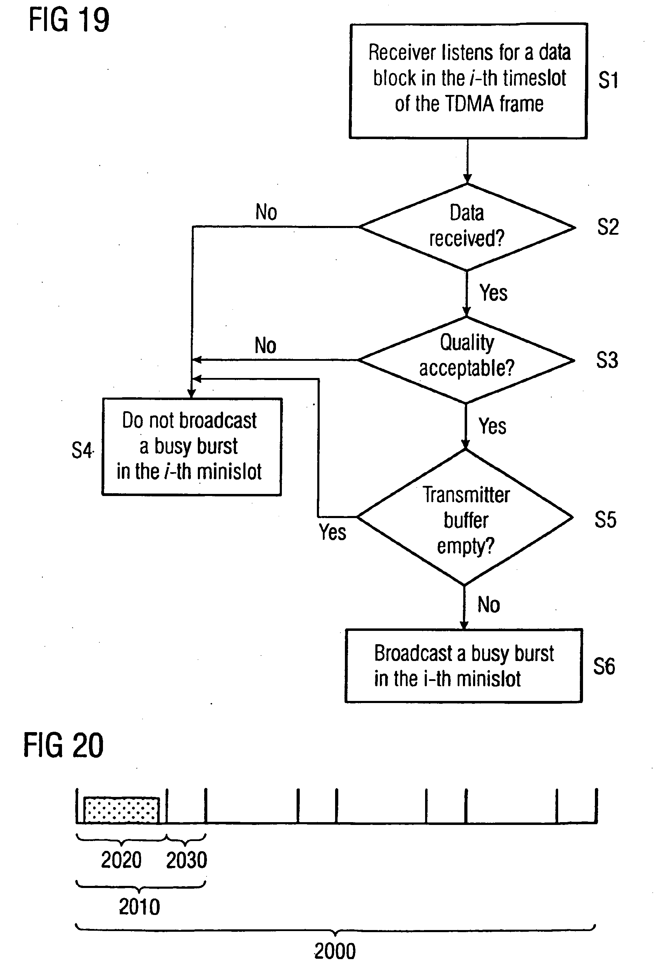

The behavior of a corresponding BB-TDMA receiver is illustrated in the flowchart in Fig. 19. The receiver listens for data blocks during every time slot of the TDMA frame in a first step S1. If data is received in a second step S2 the receiver verifies the reception quality of the data block in a third step S3. If the reception quality was satisfactory it proceeds with step S5, where it verifies if the transmitter still has data in its buffers. The transmitter buffer state verification is done on the basis of the signaled transmitter buffer state (STBS) from the transmitter. If the transmitter still has data in its buffers, the receiver would transmit a busy burst in the i-th busy signal time slot in step S6, in order to acknowledge the successful reception of the data block transmission of the i-th payload signal time slot of the current TDMA frame. If the receiver does not receive any data, if it receives data with dissatisfactory quality, or if the transmitter buffer is empty and the transmitter has succeeded its transmission, the receiver would not broadcast a busy burst in the i-th mini slot anymore, as shown in step S4.

The basic time structure of a BB-TDMA frame is depicted in Fig. 20 showing a BB-TDMA frame 2000 that is composed of four time slots 2010, of which each is composed of a payload time slot 2020 and a busy signal time slot 2030. As indicated in Fig. 20, there is a data block transmission during the payload time slot 2020, however there is no busy signal response during the associated busy signal time slot 2030 from an intended receiver. This means that the transmitter reverts to contention mode. However, if the data block transmitted during the payload time slot 2020 was the last data block in the transmitter buffer, then it may as well have succeeded with its transmission and no busy signal for acknowledging the transmission of the last data block of the transmit buffer is necessary.

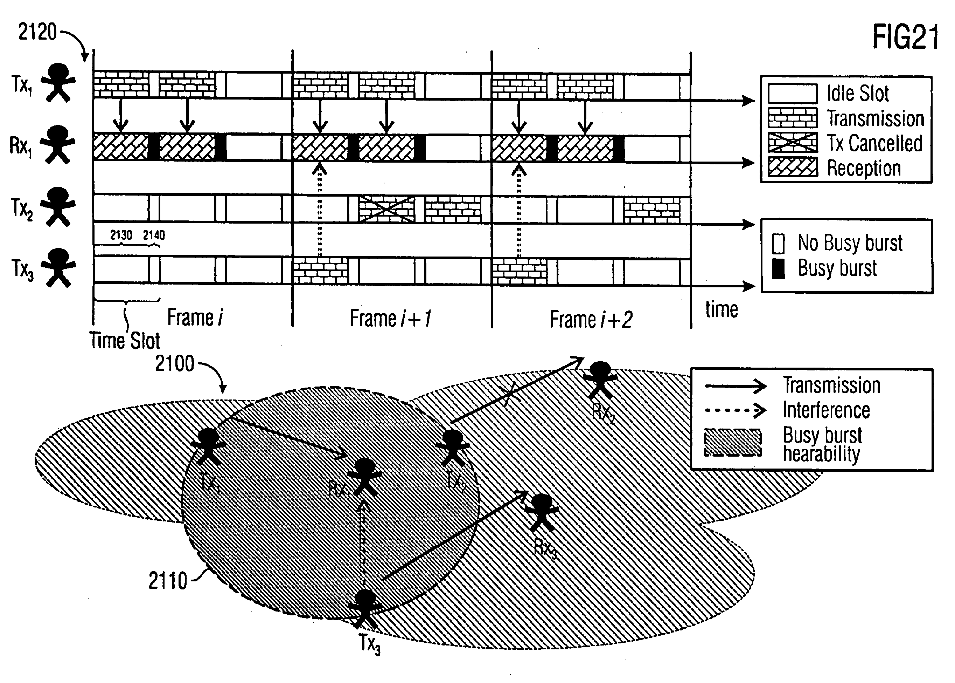

A conventional communication sequence according to the BB-TDMA protocol is illustrated in Fig. 21 showing a communication scenario 2100 where three transmitters $Tx_1$, $Tx_2$ and $Tx_3$ attempt to communicate with the three receivers $RX_1$, $Rx_2$ and $Rx_3$, i.e. setting up three transmitter-receiver pairs, $Tx_1$-$Rx_1$, $TX_2$-$RX_2$ and $Tx_3$-$Rx_3$. Solid arrows indicate that there is already an active transmission between transmitter $Tx_1$ and receiver $Rx_1$, as well as between transmitter $Tx_3$ and receiver $Rx_3$. A dotted arrow between transmitter $Tx_3$ and receiver $Rx_1$ indicates that the transmission of $Tx_3$ causes interference for the receiver $R_{X1}$. The reason why $Tx_3$ is transmitting although there is a communication going on between transmitter $Tx_1$ and receiver $Rx_1$ already, is that the transmitter $Tx_3$ is outside the hearability region of the busy burst or busy signal, which is broadcast by receiver $R_{X1}$. The hearability region of the busy burst of the receiver $Rx_1$ is indicated by a dotted circle 2110 in Fig. 21. Moreover, Fig. 21 depicts a communication sequence 2120 between the three transmitters $Tx_1$, $Tx_2$ and $Tx_3$ and at the receiver $Rx_1$. In the communication sequence 2120 three radio frames are shown, Frame i, Frame i+1, and Frame i+2. Each radio frame is composed of three time slots, of which each is composed of a payload signal time slot 2130 and a busy signal time slot 2140. During Frame i transmitter $Tx_1$ transmits data blocks during the first and second payload signal time slots. The receiver $Rx_1$ receives the two data blocks during the first and second payload signal time slots of Frame i and acknowledges the successful reception of the data blocks during the first and second busy signal time slots in Frame i, indicated in Fig. 21 by the black bars in the busy signal time slots in Frame i.

During Frame i, transmitter $Tx_3$ is already in contention mode determining whether the first payload signal time slot in Frame i is occupied or not. Since the transmitter $Tx_3$ is outside the hearability region of the busy signal of receiver $Rx_1$, it does not detect the busy signal of $Rx_1$ during the first busy signal time slot of Frame i, and consequently starts transmitting data to receiver $Rx_3$ during the first payload signal time slot of Frame i+1. Since transmitter $Tx_3$ is still outside the hearability region of the busy signal of receiver $Rx_1$, it also keeps using the first payload time signal time slot in Frame i+2. The situation is different for the transmitter $Tx_2$. $Tx_2$ was in contention mode during Frame i. Since $Tx_2$ is within the hearability region of Rx1, it detects the busy signal in the second busy signal time slot during Frame i and therefore cancels a scheduled transmission during the second payload signal time slot in Frame i+1.

Therefore the transmitter $Tx_2$ does not schedule another transmission during the second payload time slot in Frame i+2 as well. The transmitter $Tx_2$ also transmits during the third payload signal time slot in Frame i+1, however this payload signal time slot is not occupied by receiver $Rx_1$ and thus it does not transmit a busy signal in the associated busy signal time slot, and therefore transmitter $Tx_2$ keeps using the third payload time slot also in Frame i+2.

A problem of the BB-TDMA protocol is that support of the quality of service is almost not possible. For BB-TDMA the receiver transmits a busy burst if a block of data is received with acceptable BER (bit error rate) and if there are succeeding data blocks scheduled for transmission, and it transmits no busy burst otherwise. If no busy burst is transmitted due to poor BER, the transmitter has to acquire a new channel, which can cause long delays.

These unpredictable long delays make the use of delay critical services with BB-TDMA almost impossible. With the conventional BB-TDMA it is not possible to support for example voice over IP (VoIP) services efficiently, as no mechanism is in place to control the latency of the data blocks. Additionally, the busy burst is only a binary response and transmission is aborted if the link quality between a transmitter and a receiver deteriorates below a certain quality threshold. Since the transmitter has to revert to contention mode and attempts to access the receiver from scratch, another delay is introduced. Furthermore, with this mechanism a potential transmitter, upon detecting a busy burst from any user, refrains from transmission, irrespective of the relative delay requirements between itself and the user causing the transmission of the busy burst. With the current protocol it is therefore very possible that a best effort user, for example transmitting a high amount of delay uncritical data, can seize a channel for a prolonged period of time, bearing other users, potentially utilizing delay intolerant services, from this channel. Therefore, a major disadvantage of the BB-TDMA protocol is the unfairness, which is introduced by the conventional scheme, acting in a first come first serve manner without considering different quality of service requirements.

Another important point about nowadays wireless services is that with the increasing demand for multi media services, the packet data traffic to be served in wireless systems becomes more and more heterogeneous. This heterogeneity relates to delay tolerance, data rates, allowed packet or bit error rates, peak to average throughput, uplink/downlink symmetry, mobility, etc. Furthermore, due to the scarcity of the radio frequency spectrum, the utilization, i.e. the spectrum efficiency, has to be significantly increased. The main problem is the radio propagation and the pathloss on the wireless channel, which generally is subject to time varying multipath propagation (Rayleigh fading, small scale fading) and location dependent attenuation (shadow fading, large scale fading). With the conventional BB-TDMA protocol there is no possibility to adapt the transmission to the varying channel conditions, which is a major disadvantage for the BB-TDMA protocol if it is utilized for delay critical and also error intolerant services. One of the key problems is that a transmitter in such a network needs to get physical layer information and quality of service information from its intended receiver and vulnerable receivers in a vicinity, for example channel state information and status information, as only this enables the transmitter to carry out respective radio resource management strategies and link adaptation decisions. Adding to the problem with the interference conditions being different at each receiver due to their spatial separation and with the properties of the radio propagation. Furthermore, with BB-TDMA an efficient management of the control signaling resources is not possible. This is especially disadvantageous, since the signaling is necessary to provide timely and reliable transmission of control information.

Supposing an ongoing transmission from a transmitter $Tx_m$ to a receiver $Rx_n$, denoted by link (m, n), then in the conventional busy signal concept, a new transmitter $Tx_i$ may establish a link with $Rx_j$ if the interference it would cause to the already existing link (m, n) is below a certain threshold $I_{thres}$. Before transmitting, $Tx_i$ checks the usability of channels based on the following key equation:

$$\left(\frac{I_i^b}{T_n^b}\right)T_i^d \leq I_{thres}, \tag{1}$$

where $I_i^b$ is the received busy signal power at $Tx_i$ impinging from $Rx_n$, $T_n^b$ is the transmitted busy burst power of $Rx_n$, and $T_i^d$ is the transmitted data signal power of $Tx_i$. In this case $T_n^b$ is to be fixed and must be known at a new transmitter $Tx_i$. If, furthermore, $T_n^b = T_i^d$ is assumed, then the channel can be used, if $I_i^b \leq I_{thres}$. If the received busy burst power is above the threshold, the channel is not accessed. This results in a hard and binary decision on the usability of a particular channel, which potentially causes unnecessary delays and limits the quality of service support of the protocol. As a consequence, this mechanism provides little flexibility if, for example, some receivers are more tolerant to interference and delays.

In WO 2004/100461 A1, a method of communicating messages among a number of radio communication devices via a communications medium is described. Within the method of communicating each of the messages comprises a message header and a message payload. The method comprises transmitting the message header of a first message, where the first message is to be transmitted from a first one of the number of radio communication devices to at least a second one of the number of radio communication devices at a first power level, which is high enough to enable each of the number of radio communication devices to receive the message header. The transmission power for the message header is determined in a way, such that it is ensured that the message header is received by all communication devices of the communication system. Furthermore, the method of communicating messages comprises a step of transmitting the message payload of the first message at a second power level determined separately from the first power level to be high enough to enable the second radio communications device to receive the message payload. Hence, the transmission power for the payload is determined in a way that only the communication devices to which the payload is addressed can receive the payload message.

EP 1 628 446 A1 describes a method for transmitting information through a communication link. In a communication system, and in particular a wireless communication system according to the ultra-wide band technology, information is transmitted from a transmitting device to a receiving device through a communication link. The receiving device monitors the link quality of the communication link and if the link quality diverts from a predefined quality of service parameter values, sends a respective link quality notification to the transmitting device in order to inform the transmitting device on the present status of the link quality and to instruct the transmitting device to adapt the data rate and/or the transmit power accordingly, so as to improve the link quality.

In EP 1 526 685 A1, an inter-cell interference mitigation technique using reservation indicators is described. The technique relates to a communications network comprising a plurality of stations for transmitting and receiving signals, wherein a data signal is transmitted by a transmitting station as a series of data packets. In order to avoid transmission conflicts and particular inter-cell conflicts in a cellular TDMA communications network, it is proposed that a reservation indicator is transmitted by a receiving station for reception by transmitting stations, said reservation indicator indicating after the last data packet has been received with acceptable interference from said transmitting station and/or if a data transmission resource has been reserved by said receiving station for reception of the next data packet from said transmitting station. In a preferred embodiment, the reservation indicator indicates the reservation by the receiving station of a data time slot; all the stations, even if currently served are different base stations/access points, etc., will not transmit in this data time slot in the next frame if they have listened to said reservation indicator.

In Omiyi P. et al, "Maximising spectral efficiency in 4th generation OFDM/TDMA TDD hybrid cellular mobile /ad-hoc wireless communications", VTC-Spring 2004, Milan, Italy, the authors present a t0 trategy to maximize spectral efficiency in the fourth generation OFDM/TDMA TDD wireless communications with 100% frequency reuse. The proposed method involves permitting peer-to-peer communications at the edges of cells within cellular mobile infrastructures and employing a medium access control protocol, denoted as a channel-sensing TDMA TDD, to jointly minimize intercellular interference and efficiently coordinate ad hoc communication. Channel-sensing TDMA TDD employs a modified busy-tone broadcast/channel-sensing mechanism to avoid and mitigate high interference scenarios. Simulation results show significant improvements in system capacity and spectral efficiency from the application of this approach when compared to conventional concepts.

EP 1289179 A1 provides a wireless telecommunication network comprising a first terminal and a second terminal, the first terminal including a receiving stage and a processor operative to process signals received from the first terminal and to determine a received signal quality. The second terminal also includes a transmitter operative to send a feedback signal dependant upon the received signal quality to the first terminal provided the change and received signal quality is determined as being more than a predetermined amount.

It is the objective of the present invention to provide an improved concept for BB-TDMA protocol based communication systems in order to effectively support quality of service mechanisms and enable an efficient management of the radio resources.

This objective is achieved by a receiver apparatus according to claim 1, a method for receiving according to claim ,11 or a computer program according to claims 12.

The present invention provides a receiver apparatus, comprising a receiver module for receiving a payload signal; a quality estimator for estimating a reception quality of the received payload signals; the receiver apparatus further comprising a busy signal transmitter for transmitting a busy signal in a predefined busy signal time slot, when the reception quality is above a quality threshold, the busy signal transmitter being adapted for generating the busy signal such that the busy signal includes information being dependent on the reception quality.

Furthermore, the present invention provides a method for receiving, comprising the steps of receiving a payload signal and estimating a reception quality of the received payload signal. The method further comprising the step of transmitting a busy signal in a predefined busy signal time slot, when the reception quality is above a quality threshold, generating the busy signal such that the busy signal includes information being dependent on the reception quality.

Moreover, the present invention provides a computer program having a program code for performing the inventive method, when the program code runs on a computer.

The present invention is based on the finding that significant improvements can be achieved by including further information into the busy signal in a communication scenario using a BB-TDMA component. By including for example status information on the reception quality of a payload signal reception from a payload signal transmitter in a busy signal that in turn is received by the transmitter of the payload signal, the transmission can be adapted to the actual propagation condition. Therefore, the interference condition in a network can be controlled, respectively quality of service (QoS) measures can be used to adjust the transmission parameters of users carrying out different services. By including additional information into the busy signal an efficient means for managing the radio resources of the network is enabled.

This invention therefore provides a protocol extension for BB-TDMA enabling efficient management of quality of service classes, interference levels, user priorities, radio resource utilization, etc.

The present invention overcomes the limitations of conventional BB-TDMA of high delays, unfairness between users or user classes, unfairness between different service classes, busy burst transmit power efficiency, payload signal transmit power efficiency, overall spectral efficiency etc. Furthermore, the present invention exploits the benefits of link adaptation. This can be achieved without any need for additional capacity or signaling overhead. In comparison to the conventional approach, the new invention maximizes the use of the already existing busy burst signaling overhead to achieve quality of service management and high spectral efficiency in a simple, decentralized manner. The present invention is therefore applicable for cellular, ad hoc, multi-hop and the like networks.

Further advantages of the present invention are an effective means to manage co-channel interference, which also enables quality of service support, link adaptation, and additional system capacity. The present invention can be implemented without any additional signaling overhead or additional bandwidth taking advantage of an implicit signaling scheme. The present invention supports decentralized medium access and channel allocation. With the present invention the transmit power of any number of potential interferers on the same channel can be set by broadcasting a single busy burst. Another advantage of the present invention is that it has low complexity and can be implemented easily.

Comparing to the conventional BB-TDMA protocol no busy signal threshold optimization in order to detect the presence of a busy signal is needed. One embodiment of the present invention can be based on a single network constant. This constant could potentially be determined from a few known system parameters such as a maximum transmit power, a minimum transmit power, a minium and/or a maximum absolute interference tolerance level, etc.

The present invention further provides a novel feedback mechanism which can be exploited for dynamic feedback transmission to increase the spectral efficiency in a multiple link and multiple user environment and to support quality of service requirements of different services. Basically, any receiver in a network can transmit either explicitly or implicitly control information to an intended user as well as to potential interferers in order to provide efficient quality of service support. The channel reciprocity of a time division duplex scheme is exploited by the implicit signaling variant of the present invention. Opposed to a fixed allocation of channels for control information, an efficient dynamic channel assignment mechanism for control information is brought up in place in the present invention, the control information is then protected by means of the busy tone transmission principle.

Preferred embodiments of the present invention are described in detail with respect to the following Figures, in which:

Fig. 1 shows an embodiment of the inventive transmitter apparatus;

Fig. 2 shows an embodiment of the inventive receiver apparatus;

Fig. 3 shows another embodiment of the inventive transmitter apparatus;

Fig. 4 shows another embodiment of the inventive receiver apparatus;

Fig. 5 shows a flowchart of an embodiment of an inventive enhanced BB-TDMA receiver apparatus;

Fig. 6a) shows an example scenario of an embodiment for inventive link adaptation through busy burst signaling;

Fig. 6b) shows an example scenario of an embodiment in a time-out scenario for inventive link adaptation with busy burst signaling;

Fig. 7 shows a flowchart of an embodiment of the inventive enhanced BB-TDMA transmitter in contention mode;

Fig. 8 shows a flowchart of an embodiment of an inventive enhanced BB-TDMA transmitter in reservation mode;

Fig. 9 shows an exemplified scheme of another embodiment of the present invention with busy signal transmission power adaptation;

Fig. 10 illustrates an embodiment of the present invention in an example scenario of piggy-backed busy burst information for transmitters and interferers;

Fig. 11 shows an embodiment of the present invention using an example scenario of piggy-backed signalling of priority with busy burst;

Fig. 12 shows an embodiment of the present invention using an example scenario for piggy-backed signalling of priority with busy burst;

Fig. 13 shows an embodiment of the present invention using an example of link protection established by a busy burst;

Fig. 14 shows an example scenario to illustrate the inventive mechanism of busy burst transmit power and payload signal transmit power adjustment;

Fig. 15 shows a viewgraph, visualizing the interference tolerance and the busy tone power according to one embodiment of the present invention;

Fig. 16 shows a visualization of a busy tone receive power, a maximum possible data transmit power, a busy tone transmit power and a receiver sensitivity level of one inventive embodiment;

Fig. 17 shows a flowchart of a conventional BB-TDMA transmitter in contention mode;

Fig. 18 shows a flowchart of a conventional BB-TDMA transmitter in reservation mode;

Fig. 19 shows a flowchart of a conventional BB-TDMA receiver;

Fig. 20 shows the conventional structure of a BB-TDMA frame.

Fig. 21 shows a conventional communication scenario following the BB-TDMA protocol.

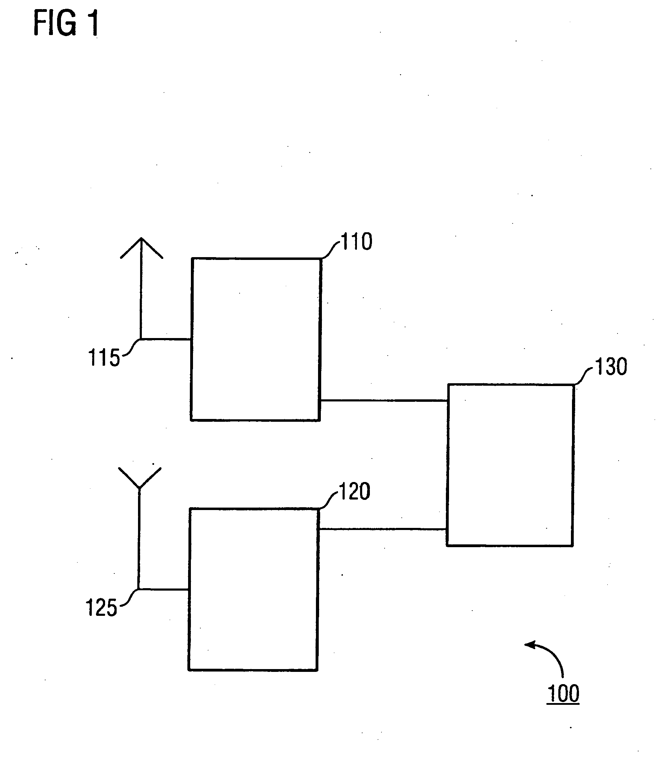

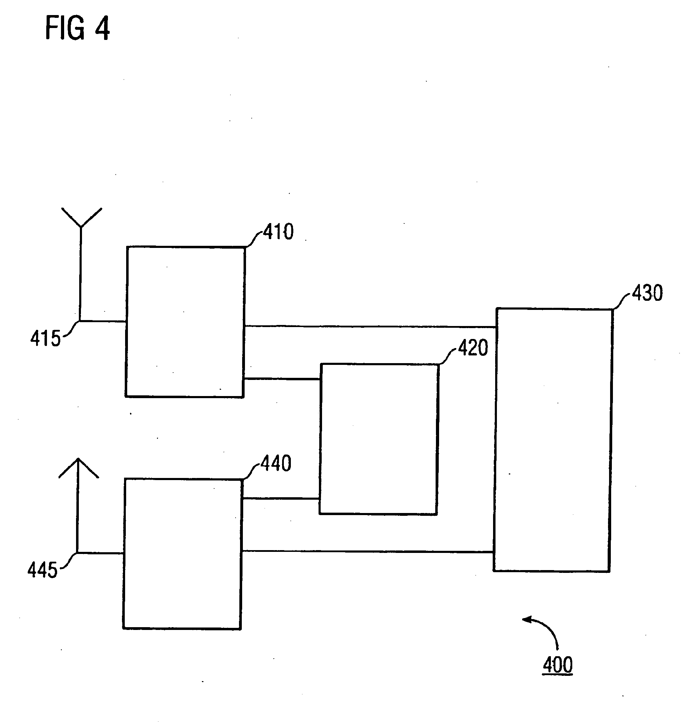

Fig. 1 shows an embodiment of the present invention, being a transmitter apparatus 100, comprising a transmitter module 110 with a transmit antenna 115, a busy signal receiver 120 with a receive antenna 125, and a control module 130.
The transmitter apparatus 100 depicted in Fig. 1 comprises a transmitter module 110, having an adjustable transmitter characteristic for transmitting a payload signal in a predefined payload signal time slot, a busy signal receiver 120 for receiving a busy signal in a predefined busy signal time slot; the busy signal including information being dependent on a reception quality of a transmitter of the busy signal; and a controller module 130 for adjusting the adjustable transmitter characteristic on the basis of the reception quality information.

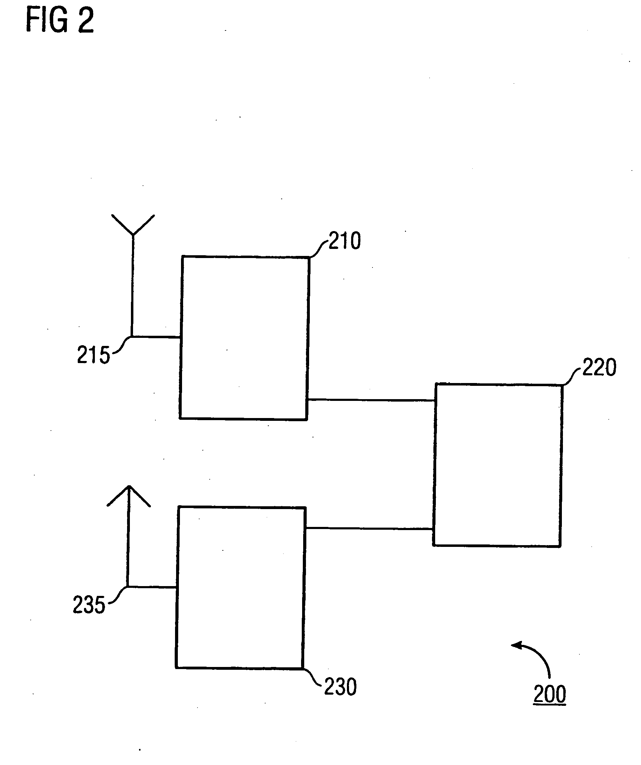

Fig. 2 shows an embodiment of the inventive receiver apparatus 200. The receiver apparatus 200 as depicted in Fig. 2 comprises a receiver module 210 with a receive antenna 215, a quality estimator 220, and a busy signal transmitter 230 with a transmit antenna 235.
The receiver apparatus 200 as illustrated in Fig. 2, comprises a receiver module 210 for receiving a payload signal, a quality estimator 220 for estimating a reception quality of the received payload signal, and a busy signal transmitter 230 for transmitting a busy signal in a predefined busy signal time slot, the busy signal transmitter being adapted for generating the busy signal such that the busy signal includes information being dependent on the reception quality.

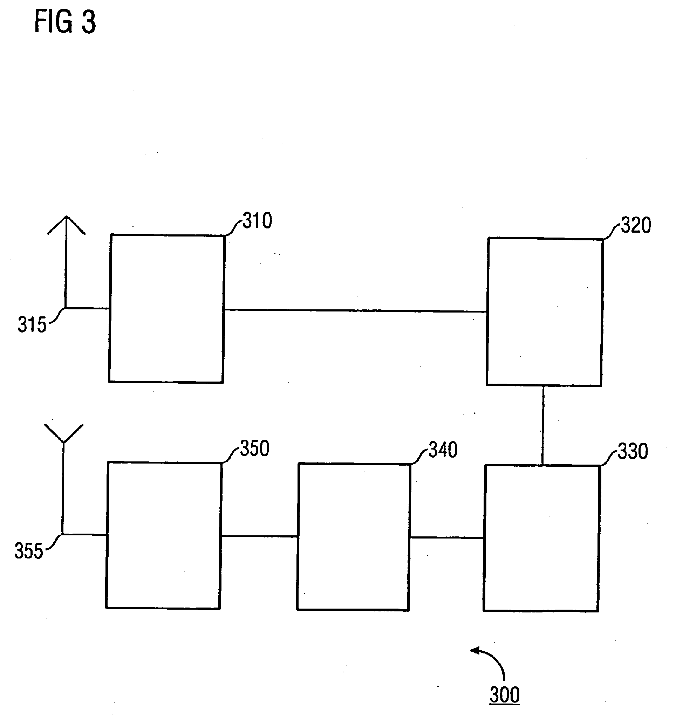

Fig. 3 depicts another embodiment of an inventive transmitter apparatus. The transmitter apparatus 300 shown in Fig. 3 comprises a transmitter module 310 with a transmit antenna 315, a transmission decider 320, a busy signal information interpreter 330, a busy signal information extractor 340, and a busy signal receiver 350 with a receive antenna 355.
The transmitter apparatus 300 as illustrated in Fig. 3 comprises a busy signal receiver 350 for receiving a busy signal from a first receiver in a busy signal time slot associated with the payload signal time slot in a current frame, the busy signal having additional information useful for a transmitter transmitting the payload signal in the payload signal time slot or a different transmitter not using the payload signal time slot. The transmitter apparatus 300 further comprises a busy signal information extractor 340 for extracting the additional information useful for the different transmitter and an information interpreter 330 for interpreting the extracted information. The transmitter apparatus 300 further comprises a transmission decider 320 for deciding to perform a transmission of a scheduled payload information to such a receiver, when the information interpreter generates a transmission allowed indication, and a transmitter module 310 for performing a transmission of the scheduled payload information in a payload signal time slot of a later frame, when a transmission decision exists.
Another embodiment of an inventive receiver of the present invention is illustrated in Fig. 4 showing a receiver apparatus 400 comprising a receiver module 410 with a receive antenna 415, a quality estimator 420, a control module 430, and a busy signal transmitter 440 with the transmit antenna 445.
The exemplary receiver apparatus 400 shown in Fig. 4, comprises a receiver module 410 for receiving a payload signal in a payload signal time slot. It further comprises a quality estimator 420 for estimating reception quality of the received payload signal and a control module 430 for determining information on an allowable interference power. The receiver apparatus 400 further comprises a busy signal transmitter 440 for transmitting a busy signal and in a busy signal time slot associated with the payload signal time slot, when the reception quality is above a quality threshold, the busy signal transmitter being adapted to include information about an interference power or a payload signal reception power in the payload time slot.

In order to enable quality of service support over a wireless link, link rate adaptation is a very powerful tool. Instead of choosing for example coding and modulation schemes or a transmit power designed for the worst case scenario, the receiver can request changes in modulation, coding rate, transmission power etc., according to an embodiment of the present invention, in order to maintain an acceptable bit error rate at a receiver. An essential requirement for link rate adaptation is feedback from the receiver apparatus to the transmitter apparatus, indicating that a change for example in modulation, coding, transmission power, etc. is necessary.

The BB-TDMA protocol for decentralized interference avoidance in multi-carrier/single-carrier TDD-based systems is therefore extended to allow for decentralized multi-user link adaptation for quality of service support, according to an embodiment of the present invention. For this enhancement an embodiment of the present invention concerns modifying the busy burst signaling mechanism to accommodate link rate adaptation on the intended link. Another embodiment of the present invention concerns modifying the busy burst signal to convey quality of service information for other co-existing links.

Furthermore, the present invention provides a generalization of both embodiments and both embodiments are based on enhancing the BB-TDMA protocol. The principle introduced by the present invention applies to single-carrier as well as to multi-carrier systems. Opposed to the conventional BB-TDMA protocol, where the busy burst is used as a simple acknowledgement, the busy burst can for example be extended to include link rate adaptation feedback. The transmitter is then able to maintain its reservation, even under poor link conditions, by simply adjusting the transmission/ coding rate or other physical layer parameters as for example the transmit power. Another example for information that could be included in the busy burst in order to adapt the link rate is to use different physical layer modes. Physical layer modes are also known as transport formats, which represent combinations of a coding rate, a modulation scheme, a number of sub-carriers, a transmission power, etc. With the ability to control the link rate as given by the present invention, it is now possible to carry out quality of service support for different service classes and to manage interferences more efficiently, for example by utilizing power control.

For example a user utilizing a rather low data rate, for example a delay critical service such as a voice call (voice over IP), can be allocated to a transport format with a low data rate and low latency. Whereas a user utilizing an interactive and background service, for example in a web browsing or emailing session, a transport format corresponding to a rather high latency is used, since the interactive and background services are not delay critical. Furthermore a user with a delay critical service, for example a voice over IP user, can be prioritized by the receiver to a user who carries out an interactive and background service.

In the conventional BB-TDMA protocol, when a potential transmitter detects a busy burst, it is unaware of the delay requirements and hence the interference tolerance of the vulnerable receiver. It therefore simply refrains from transmitting. The present invention provides a busy burst conveying additional quality of service/interference tolerance information. Potential other transmitters can take advantage of this information, in effect, at what power level they can transmit protecting a quality of service performance at the vulnerable receiver. The present invention therefore extends the link adaptation process, from a single link to a multi-user link adaptation, with the transmission rate adjusted to protect the desired link quality, where the transmit power or other physical layer parameters of the link are adjusted to protect the quality of other links. One exemplary way to implement the multi-user link adaptation signaling on the busy burst, without increasing the signaling overhead of the conventional BB-TDMA protocol, is to convey the quality of service/ interference tolerance information using the busy burst power and the link rate adaptation information through digital modulation on the same busy burst channel and within the same bandwidth as the conventional approach.

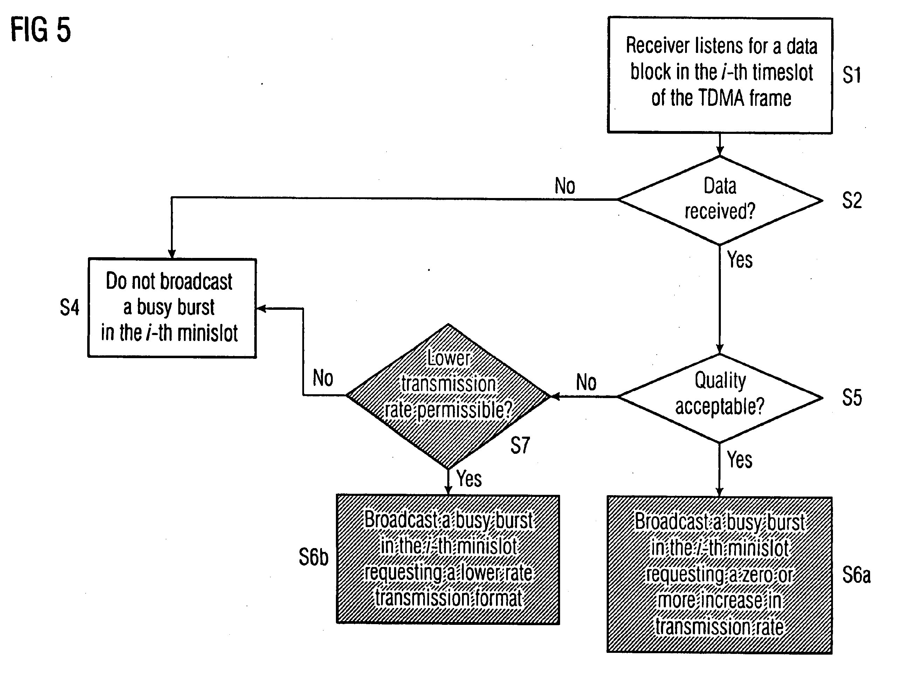

The flowchart of an enhanced BB-TDMA receiver is shown in Fig. 5 according to an inventive embodiment. Blocks which are different to the conventional BB-TDMA protocol, which is depicted in Fig. 19 are highlighted. The flowchart in Fig. 5 shows that if a data block was received with a reception quality, which is not acceptable by the receiver, an additional step S7 is introduced, where the receiver checks if it is permissible to lower the transmission rate. If lowering the transmission rate is permissible the receiver broadcasts a busy burst in the i-th mini slot, respectively busy signal time slot, requesting to lower the transmission rate, respectively by requesting a transmission format that translates into a better reception quality of the payload data, i.e. a lower transmission rate at the benefit of a lower coding rate. This step is indicated by step S6b in Fig. 5. If lowering the transmission rate is not permissible, for example because the service data rate requires a minimum rate that is already reached and no quality improvements can be achieved through modification of any other physical layer parameters, the receiver behavior corresponds to the conventional receiver behavior and no busy burst is broadcast. If the receiver receives a data block with an acceptable quality, a busy burst is broadcast in the i-th mini slot and depending on the reception quality, the receiver can even request to increase the transmission rate. This step is indicated in step S6a in Fig. 5.

Whenever a data block is received with poor reception quality, where the reception quality is, for example evaluated by a bit error rate (BER), from a transmitter with a non-empty buffer, rather than loosing the reservation and going back to contention mode, the enhanced scheme depicted in Fig. 5 can decide to lower the transmission rate, for example by changing the coding scheme and/or changing the modulation scheme or to modify any physical layer parameters, in order to improve the receive quality for example through power control. These changes are signaled to the transmitter on the busy burst in the associated busy signal time slot. The decision to lower the data rate is made in the receiver for the case the quality of service requirements allow to lower the transmission rate. If a data block is received with acceptable reception quality, then this can be signaled on the busy burst to inform the transmitter that it can either maintain its current transmission rate or even increase it. In another embodiment the transmitter may reduce its transmission power if the reception quality at the receiver is high, so the overall interference level is reduced and an acceptable reception quality is maintained, enabling higher system capacity through interference avoidance.

One further embodiment to carry out rate adaptation is to introduce different physical layer modes or transmission formats, which are sorted in ascending order with respect to the net data rate in a table, where a physical layer mode comprises a combination of modulation, coding, number of payload signal time slots, number of sub carriers, transmit power etc. A reduction in a transmission rate corresponds then to decrementing the physical layer mode by a specified number of steps in the table.

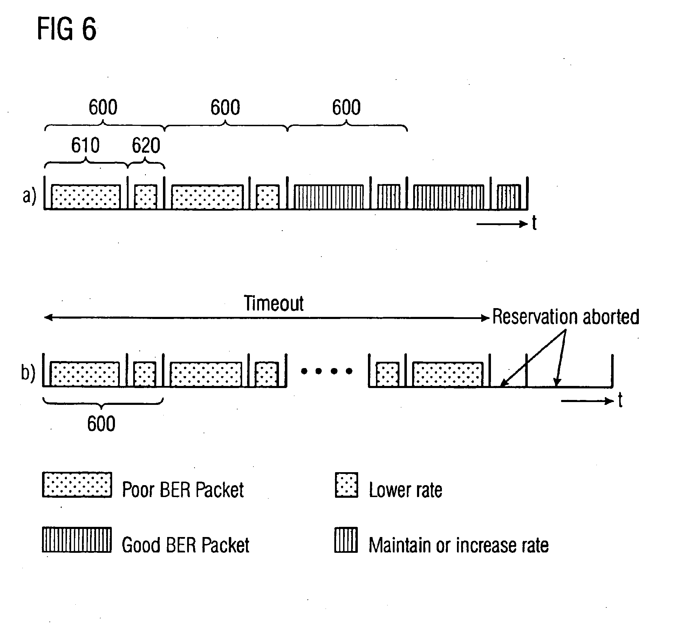

Fig. 6a) shows a sequence of time slots 600 each composed of a payload signal time slot 610 and a busy signal time slot 620. Fig. 6a) shows further a data block being received with poor quality, indicated by the dotted area during the first time slot, but nevertheless a busy burst is broadcast by the receiver, thus the reservation is maintained. The busy burst broadcast by the receiver upon reception of the poor quality data packet indicates that the transmitter should lower its data rate, which is also indicated by the dotted area. Piggy-backed link rate adaptation information is conveyed requesting for a reduction in transmission rate. This process is continued until a block is decoded with acceptable quality or until a maximum time-out limit is reached. In Fig. 6a) this is indicated by the first two time slots, in which data packets of poor reception quality are received and the associated busy burst signals convey the associated requests to decrease the data rate. During the third and fourth time slot in Fig. 6a), the reception quality of the payload data has improved, which is indicated by the striped areas. As a consequence the busy burst now indicates to maintain the data rate, which is also indicated by the striped area. The example shown in Fig. 6a) shows that if a block can be transmitted successfully within a maximum time-out period, the transmitter is informed of this, for example with a piggy-backed link rate adaptation feedback using the busy burst, which is also used to request a zero or more increase in data rate. The transmitter then transmits the next block of data at a requested rate. Fig. 6b) shows a similar scenario, except in this case, the receiver is unable to decode a data block with acceptable reception quality within the time-out period and so the reservation is aborted. In this scenario the reception quality of the payload data does not improve enough during the time-out period. The present invention foresees an adjustable time-out period in dependence on the transmission scenario or the service class of the user, upon which the reservation is aborted and the transmitter reverts into contention mode.

In another embodiment of the present invention additionally to link rate adaptation information conveyed by the busy burst, receiver quality of service/interference tolerance information is also signaled on the busy burst of an enhanced scheme. In a link adaptive system, the greater the delay tolerance or the lower the minimum data rate requirement on a certain link, the more interference it can tolerate. This is because the transmission rate can be reduced to maintain an acceptable bit error rate, respectively an acceptable reception quality. The delay tolerance on the minimum data rate requirement of a certain link simply maps to an interference tolerance. Equivalently, independent on the other physical layer parameters, the transmission power can be adjusted in order to meet a certain bit error rate or reception quality requirement. One embodiment of the present invention is to signal information about all these parameters on the busy burst, in order to make efficient use of the available radio resources.

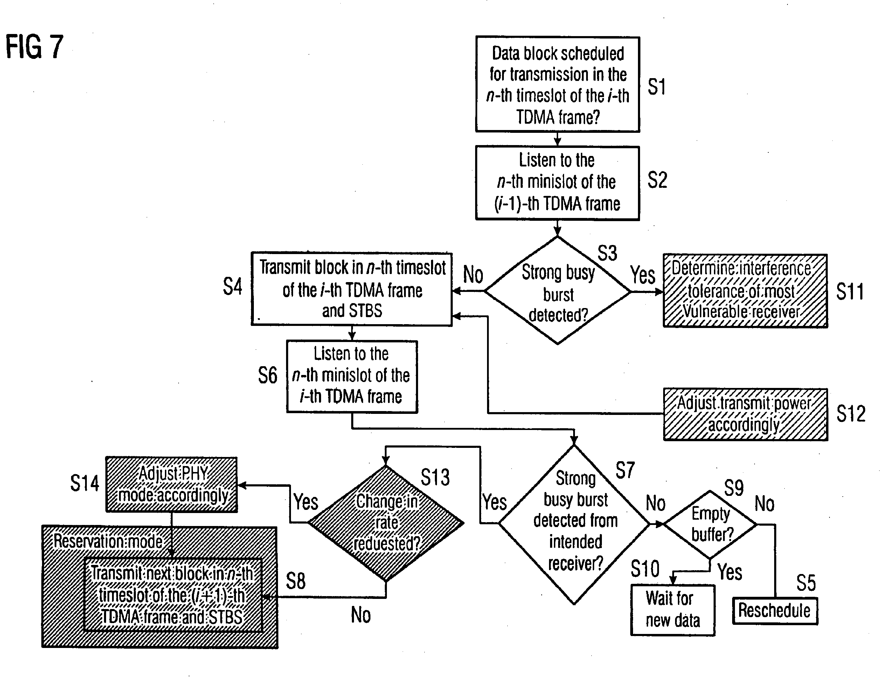

Fig. 7 depicts a flowchart of an embodiment of an inventive enhanced BB-TDMA transmitter in contention mode, blocks which are different from the conventional BB-TDMA transmitter depicted in Fig. 17 in contention mode are highlighted. Similar to the conventional approach, the transmitter, before transmitting in contention mode in a scheduled time slot, which is indicated by step S1 in Fig. 7, listens for potential busy burst from receivers using its intended time slot, according to step S2 in Fig. 7. When the transmitter detects busy bursts from vulnerable receivers, which is done in step S3, the transmitter attempts to adjust its transmit power to a level that would be acceptable to the most vulnerable receiver using its intended time slot, which is indicated by steps S11 and S12 in Fig. 7.

The transmitter then transmits the data block, as indicated in step S4, in which it includes its signal transmitter buffer status (STBS) and listens to the associated minislot of its used payload signal transmission slot. This is indicated in step S6 in Fig. 7. Furthermore, in Fig. 7 it is assumed in step S4 that the transmitter transmits the data block in the n-th time slot of the i-th TDMA frame and accordingly it listens to the n-th minislot or busy signal time slot of the i-th TDMA frame. Although, like the conventional BB-TDMA transmitter, the enhanced scheme of the present invention uses the busy burst from the intended receiver as an acknowledgement, unlike the conventional scheme, it also uses it as a means of the determining transmission rate for the next data block. The process of evaluating the information contained in the busy burst and adjusting the data rate is carried out in steps S13, S14, and S8 in Fig. 7.

After a strong busy burst was detected, the transmitter checks in step S13 whether a change in rate was requested or not. If a change in rate was requested, the physical layer parameters or physical layer settings are adjusted in step S14 according to the detected change request in rate from step S13. After the physical layer mode has been adjusted in step S14 the transmitter changes its mode into reservation mode, which is indicated in step S8 in Fig. 7. If in step S13 no change in rate is requested then the busy burst serves as a simple acknowledgement and the transmitter continues in reservation mode without any change in rate. This multi-user link adaptation increases the chances of a contention mode transmitter acquiring a reservation, by lowering the delay and ensuring fairness.

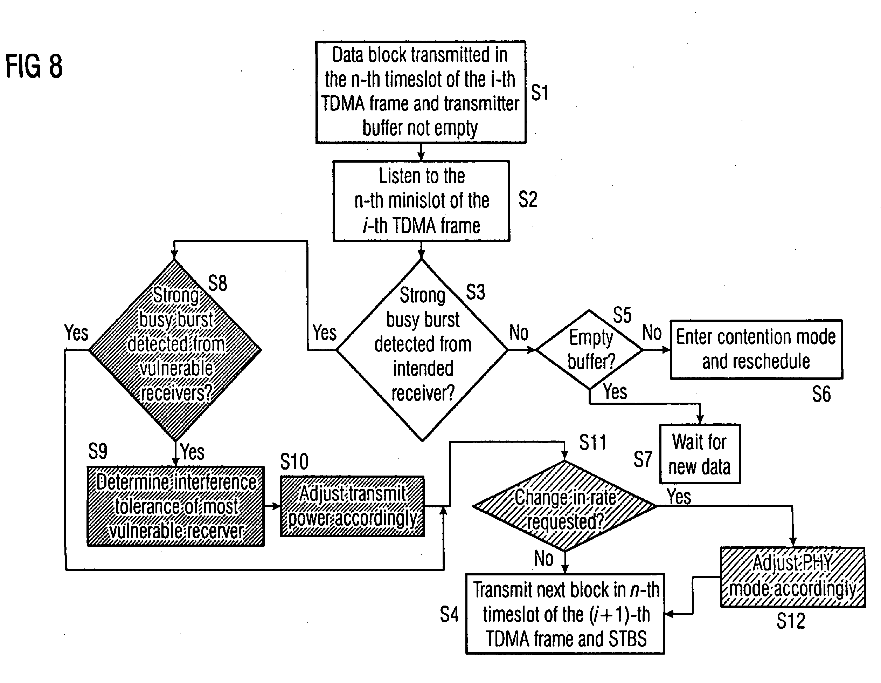

Figure 8 illustrates an embodiment of the present invention of an enhanced reservation mode of a BB-TDMA transmitter. Blocks which are different to the conventional BB-TDMA reservation mode, which is depicted in Fig. 18, are highlighted. Unlike the conventional approach, the enhanced transmitter, after transmitting in its scheduled time slot as indicated in step S1 and Fig. 8, listens to potential busy bursts from vulnerable receivers using the same time slot and to the busy burst from its intended receiver. If a strong busy burst is detected from the intended receiver in step S3, the transmitter evaluates the busy bursts detected from vulnerable receivers as well in step S8. If strong busy bursts are detected from vulnerable receivers in step S8 the transmitter attempts to adjust its transmit power to a level that would be acceptable to the most vulnerable receiver, which is done in steps S9 and S10. In addition, like the conventional BB-TDMA transmitter, the enhanced schemes use the busy burst from the intended receiver as an acknowledgement. Unlike the conventional scheme, however, the transmitter also uses the busy burst as a means for determining the transmission rate for the next data block, in a similar manner to its contention mode operation as it was explained using Fig. 7.

If no strong busy bursts were detected from vulnerable receivers or if a strong busy burst was detected from a vulnerable receiver and the transmission power was adjusted accordingly the transmitter evaluates information from the busy burst of the intended receiver and adapts its transmission rate according to step S11 and S12. Again the transmission rate adjustment can be carried out, for example by maintaining a transmission format table that lists certain combinations of physical layer transmission characteristics as, for example coding schemes, modulation schemes, number of sub-carriers, frequency of sub-carriers etc. If no change request for the transmission rate was detected in step S11 from the intended receiver, the transmitter continuous in reservation mode with the corresponding transmission during the next TDMA frame according to step S4. The advantage of this exemplary embodiment of the present invention is that the multi-user link adaptation increases the chances for maintaining a reserved link, thus further minimizing delay and maximizing spectral efficiency, while ensuring fairness and enabling higher system capacity.

In another embodiment of the present invention the signaling of the enhanced busy burst scheme ideally does not introduce any signaling overhead compared to the conventional scheme. The rate adaptation information can be signaled as digitally encoded data, for example in a piggy-backed fashion on the busy burst, within the same busy burst signaling bandwidth as the conventional scheme. In a basic embodiment of the present invention, the busy burst can be used to carry only a single bit of information, telling the transmitter to decrease or to increase the transmission rate, setting the bit to zero could tell the transmitter to continue with the same data rate. Additionally, the delay tolerance or minimum rate requirement of a transmission in a link rate adaptive system is related to its interference tolerance. The busy burst can also be used to convey this information without any additional overhead, for example by adjusting the busy burst transmit power in relation to the maximum allowed interference power.

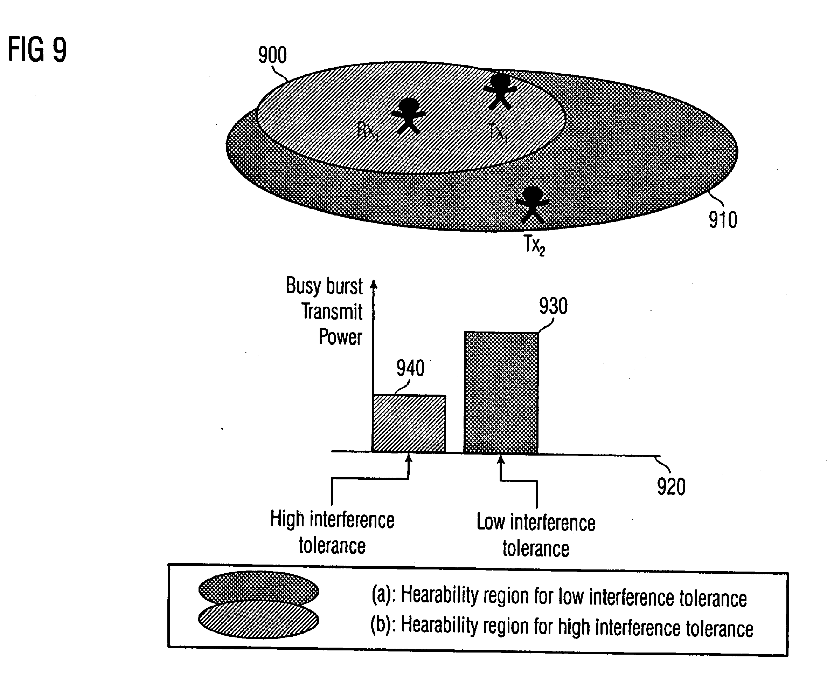

Fig. 9 shows a receiver $Rx_1$ and two transmitters $Tx_1$ and $Tx_2$. Furthermore two hearability regions for two different busy signal transmit power settings 900 and 910 are shown. The larger hearability region 910 corresponds to a higher busy signal transmit power setting as indicated in the transmission power diagram 920 in the bar graph 930. The smaller hearability region 900 corresponds to the lower busy burst transmit power setting indicated by the bar graph 940 and the busy burst transmit power diagram 920.

In one embodiment of the present invention, the lower the interference tolerance at the receiver, the higher the busy burst transmit power, in order to restrict more potential interferers. In the illustrated example in Fig. 9, when the interference tolerance is low, $Rx_1$ broadcasts a high power busy burst, which restricts the potential interferer $Tx_2$. However, when the interference tolerance is high, $Rx_1$ broadcasts a low power busy burst, which is only received by $Tx_1$, while not restricting channel access to the more distant user $Tx_2$. By employing combined digital modulation and busy signal power adjustments on the busy burst, the enhanced busy burst scheme can be implemented without any additional overhead from the conventional scheme. This, for example, also holds for OFDM (Orthogonal Frequency Division Multiplexing) systems.

Link adaptation techniques, such as adaptive modulations/coding, incremental redundancy or Chase combining as for example used in hybrid ARQ (ARQ = Automatic Retransmission Request) techniques, are used to adapt the transmission format to the varying channel conditions, these techniques aim at improving the performance on a single link. In an embodiment of the present invention, the impact of link adaptation on other links is taken into account. The crucial issue is to utilize information that resides in the physical layer not only to improve the quality on a single link, but to use this information for improving the quality on other links, for example through effective interference aware user scheduling and dynamic channel selection. Any entity in a network can therewith gain information about the interference tolerance of neighbouring entities and take this into account for scheduling, channel selection and transmission format selection. Again, this information can be used to carry out a more efficient radio resource management.

The present invention allows to realize these mechanisms in a decentralized manner, as these mechanisms are to be deployed in meshed networks, which use ad hoc and multi hoc communications or other forms of self-organizing networks. The busy burst can also be used to enable receivers to feedback general information to the corresponding transmitters and to provide other transmitters with the necessary information, to enable them to adjust their channel usage such that the receivers do not experience unacceptable performance degradations, such as poor quality of service or degraded data throughput. Since a centralized controller is not needed, efficient decentralized radio resource management and quality of service management is enabled. A TDD air interface with a busy burst channel, which is used to carry piggy-backed information as for example control information, dedicated to a corresponding transmitter as well as information dedicated to other potential transmitters in the neighbourhood is assumed. In this embodiment of the present invention, the busy signal is used to convey system relevant information in a two-fold manner, which is dedicated information directed to the intended transmitter and information broadcast to potential interferers, i.e. to transmitters in a vicinity.

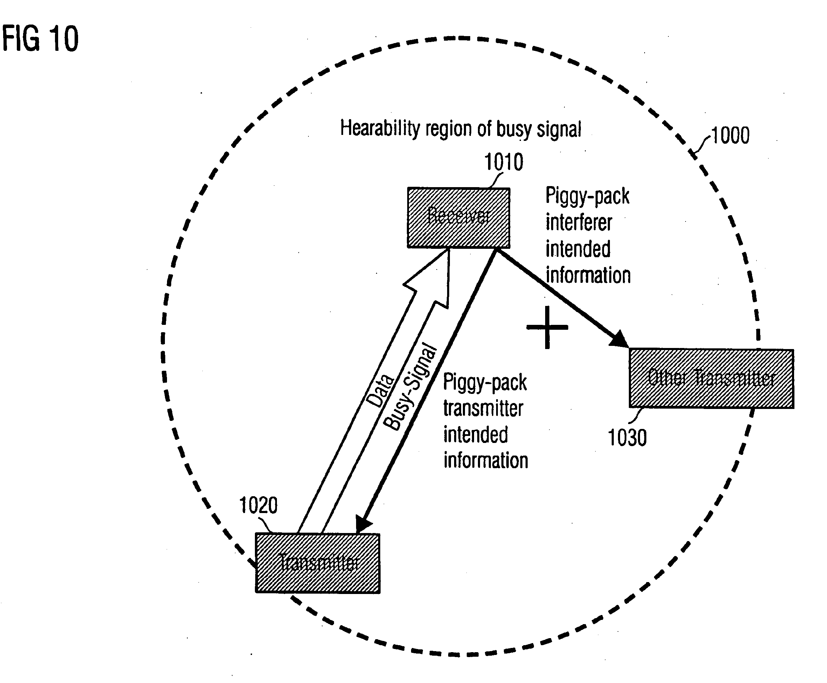

Fig. 10 shows an example scenario illustrating an embodiment of the present invention. In Fig. 10 the dotted circle 1000 shows the hearability region of a busy signal. Within this region, there is a receiver 1010 receiving data from a transmitter 1020 and broadcasting the busy signal. Within the hearability region 1000 there is another transmitter 1030, which does not transmit payload data to the receiver 1010, but receives the busy signal from the receiver 1010. The signalled information, which is piggy-backed on the busy burst, can be used for link adaptation, scheduling, dynamic channel selection, radio resource management, etc. by the intended transmitter 1020, however, the content of this information can also be used by other transmitters as 1030. The content of this information can vary according to the actual deployment scenario. Again, the additional information can be digitally modulated and carried explicitly or can be modulated in an analogous fashion being implicit. Potential information that can be included in the busy burst is, for example, channel state information on the link between the intended transmitter 1020 and the receiver 1010, channel state information on other links, which could be useful in point-to-multipoint scenarios, relative transmission priority and/or delay tolerance on other links, which could also be useful in point-to-multipoint scenario, tolerable interference levels, achieved signal-to-interference-and-noise-ratio levels, physical layer mode or transmission format change requests, channel or sub-channel change requests, transmit power change requests, channel statistics, etc.

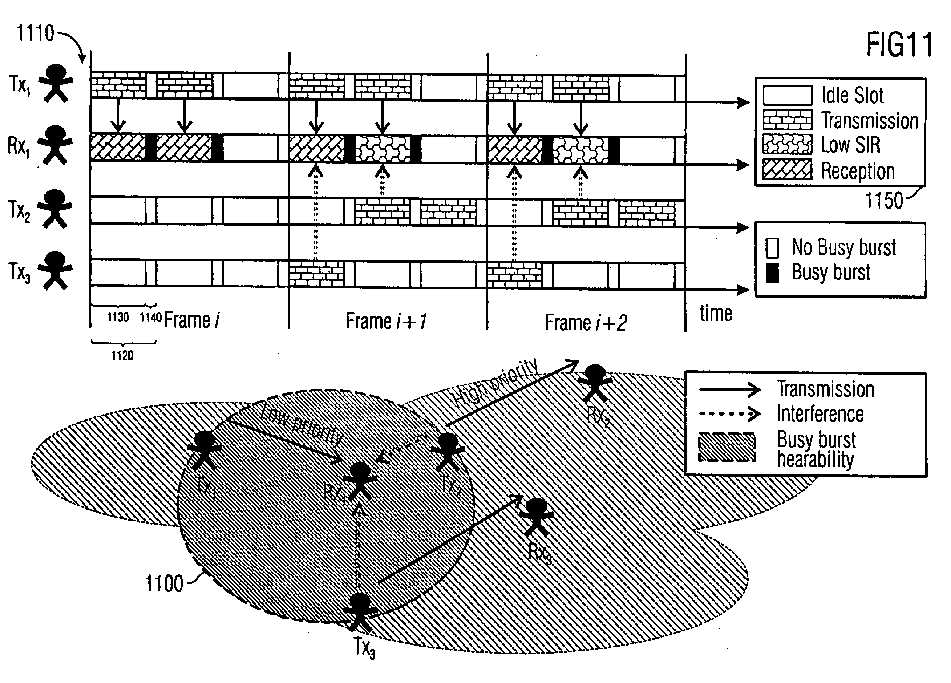

Fig. 11 shows an embodiment of the present invention using an example scenario with 3 transmitter-receiver pairs $Tx_1$-$Rx_1$, $Tx_2$-$Rx_2$, and $Tx_3$-$Rx_3$. Intended communication links are indicated by solid arrows, interference is indicated by dotted arrows. The busy burst hearability region of receiver $Rx_1$ is indicated by a dotted circle 1100. Furthermore, Fig. 11 shows a sequence of 3 radio frames 1110, Frame i, Frame i+1, and Frame i+2, for the receiver $Rx_1$ and the three transmitters $Tx_1$, $Tx_2$ and $Tx_3$. Each radio frame contains three time slots 1120, of which each is composed of a payload signal time slot 1130 and a busy signal time slot 1140. Busy signal time slots in which a busy burst is transmitted, are indicated by a black bar, busy signal time slots during which no busy burst is transmitted, are indicated by a white bar. The different signals during the payload signal time slots are indicated by the patterns shown in the legend 1150.

Fig. 11 shows an example for an embodiment of the present invention with additional information piggy-backed on the busy burst. In this case, $Rx_1$ signals on the busy burst the transmission priority of the $Tx_1$-$Rx_1$ link to transmitters $Tx_2$ and $Tx_3$ in its vicinity. $Tx_1$ transmits data in the first and second payload signal time slots of each frame and receives busy signal acknowledgments from $Rx_1$ in the associated first and second busy signal time slots of the frames. As in the case of the conventional scheme, $Tx_3$ detects a weak busy burst, and so starts transmitting regardless, since due to the channel reciprocity its interference to $Rx_1$ is also weak and has an negligible impact on the quality of service. $Tx_2$ detects a strong busy burst during Frame i in the first and second busy signal time slot and it determines from the piggy-backed information that it has a higher relative transmission priority than $Tx_1$. So $Tx_2$ transmits during the second payload signal time slot in Frame i+1. The different transmission priorities are indicated by the labelled transmission arrows in Fig. 11.

The result is that $Rx_1$ experiences a lower signal-to-interference-ratio in the second time slot of the second and third frames, since $Tx_2$ causes interference. Because the $Tx_1$-$Rx_1$ link is of a lower priority, it can tolerate the lower signal-to-interference-ratio, additional delays and/or lower data rates, to maintain acceptable error rates. A more precise example would be, if $Tx_1$ transmits background data to $Rx_1$ as, for example, during a web browsing or emailing session, while $Tx_2$ starts a voice call with $Rx_2$. As the web browsing or emailing session can tolerate higher delays, whereas the voice call between $Tx_2$ and $Rx_2$ is delay sensitive, the voice call gets assigned a higher priority and can therefore cause some degradation in the transmission between $Tx_1$ and $R_{X1}$. However, the nature of a web browsing or emailing session is not as delay critical, therefore a user using a link corresponding to the one between $Tx_1$ and $Rx_1$ might not even notice any degradation in the actual application.

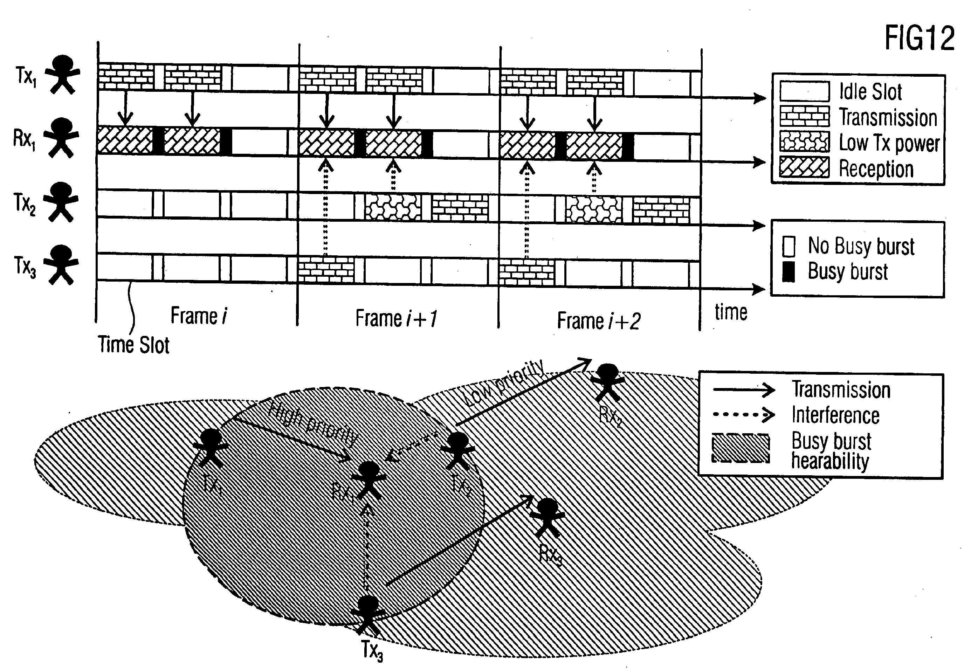

In Fig. 12 a similar scenario is depicted as in Fig. 11, however, priorities are inverted. The link between $Tx_1$ and $Rx_1$ has now a higher priority than the link between $Tx_2$ and $Rx_2$. Therefore, $Tx_2$ reduces its transmit power when transmitting in the same slot used by $Rx_1$ and $Tx_1$, thus, maintaining a high signal-to-interference-ratio at $Rx_1$, while exposing itself to a lower signal-to-interference-ratio and the possibility of additional delays and/or lower transmission rates. The control information transmitted to $Tx_1$ informs it that it can continue using the same slot in subsequent frames, it may also inform it to change its coding or modulation scheme or inform it of the channel state information on other links in a broadcast scenario.

The control information is broadcast on the same busy burst to $Tx_3$ and permits it to transmit on the same channel, which is the first time slot, colliding with the transmission between $Tx_1$-$Rx_1$. However, this may be with modifications to the transmit power or transmission format of $Tx_3$ using the signalled information on the busy burst, such as quality of service information or the interference tolerance of the $Tx_1$-$Rx_1$ link. The control information broadcast to $Tx_2$, however, causes it to refrain from transmitting during the first payload signal time slot, transmitting with reduced transmit power during the second payload signal time slot and use the third time slot for regular transmission in the example depicted in Fig. 12. This scenario would for example correspond to the case, where $Tx_1$ has a voice call ongoing with $R_{X1}$, which has a high priority, while $Tx_2$ attempts to start a web browsing session. Now, the web browsing session is not allowed to disturb, interrupt or deteriorate the ongoing voice call.

One embodiment of the present invention makes use of the busy burst to convey control information that allows for dynamic and efficient allocation, of resources for control information of each active link. This is because a busy burst is only transmitted by a receiver following the reception of a data block and not when the receiver is idle. The control information transmitted from a receiver to its corresponding transmitter is implicitly protected from interference by the busy burst protocol. This is because of the TDD channel reciprocity.

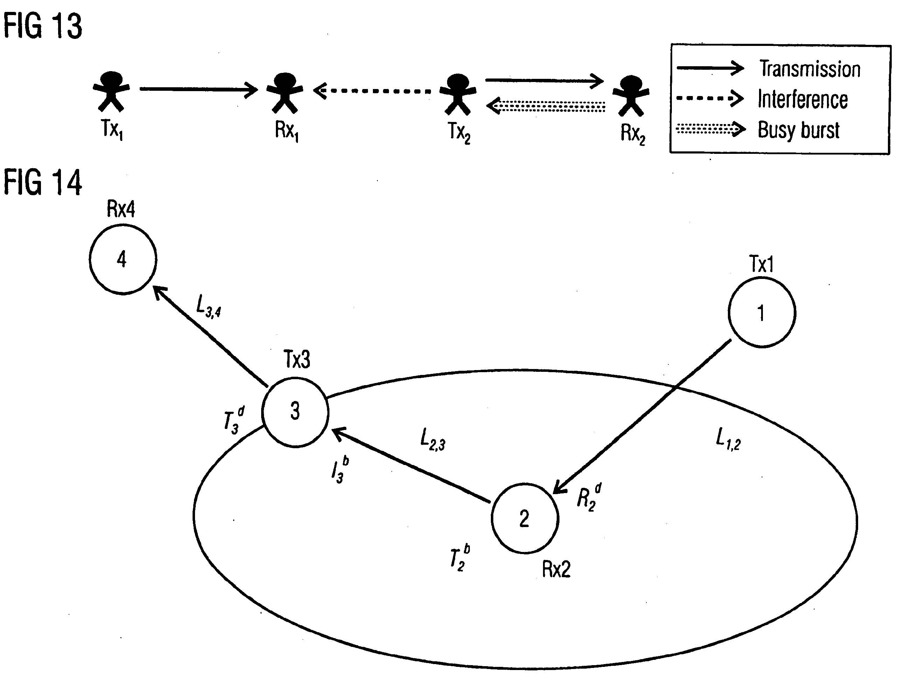

Fig. 13 shows a scenario that demonstrates the protective means of the busy burst. Fig. 13 shows two transmitter-receiver pairs, $Tx_1$-$Rx_1$ and $Tx_2$-$Rx_2$, where transmission of payload data as indicated by solid arrows, interference is indicated by dotted arrows, and the busy burst signal is indicated by the double dotted arrow. When $Tx_2$ is communicating with $Rx_2$, its interference disturbs the nearby receiver $R_{X1}$. Therefore, $Rx_1$ is unable to detect a transmission from $Tx_1$, and so it does not broadcast a busy burst. Thus, $Tx_2$ receives with low interference the control information on the busy burst transmitted by its intended receiver $Rx_2$. As a consequence, possibly a lower rate channel coding, or a higher order modulation, or any higher order transmission format, respectively radio resources can be employed on the control link.

Another embodiment of the present invention allows decentralized self-organized link adaptation in a manner that the required signal-to-interference-and-noise-ratio at vulnerable receivers in the vicinity of a transmitter is taken into account when the transmitter changes its transmission format.

In order to enable this interference aware link adaptation, every receiver signals the level of interference it can tolerate, respectively, the received payload reception power by its intended transmitter either explicitly using busy burst piggy-backing, or implicitly by varying the busy burst transmit power. This enables link adaptation and quality of service support in multi-user, cellular, or adhoc networks, respectively in hybrids thereof. Any receiver in the network broadcasts the level of interference it can tolerate based on its required signal-to-interference-and-noise-ratio and on the received payload reception power from its intended transmitter. Potential other transmitters, which are sources of co-channel interference (CCI), as they receive the broadcast message, use the information received to adjust their transmit power, such that the absolute interference level at the vulnerable receiver is maintained. The process does not require central control. One important advantage of this embodiment of the present invention is that it does not require any additional signalling overhead other than the standard busy signal in principle. The only additional overall requirement is a network constant, which is assumed to be known at any entity in a network.

Another advantage is that the signalling is error-free, since it is the received busy burst power that determines the transmit power of a potential interferer and is adjusted dynamically by a vulnerable receiver as a function of its interference tolerance, respectively the reception power of a payload signal. This remains true even when multiple busy bursts are received simultaneously. Furthermore, the principle of this embodiment minimizes the busy tone transmit power. In order to explain this embodiment of the present invention in detail, two links are assumed, which are competing for resources, link (i, j) from $Tx_i$ to $Rx_j$ and link (m, n) from $Tx_m$ to $Rx_n$. The received busy signal power $I_i^b$ from receiver $Rx_n$ to transmitter $Tx_i$ can generally be determined as

$$I_i^b = \frac{T_n^b}{L_{n,i}},\qquad\qquad (2)$$

where $T_n^b$ is the transmitted busy burst power of $Rx_n$ and $L_{n,i}$ is the pathloss between the data receiver $Rx_n$ and transmitter $Tx_i$. $Rx_n$ acts as a transmitter for the busy signal, while the data transmitter $Tx_i$ acts as a receiver for the busy signal. $I_i^b$ denotes interference, i.e. the part of the received busy signal, which is not from the own receiver $Rx_j$, but

from interfering links. $R_i^b$ denotes the part of the received busy signal from the own link, i.e. from $Rx_j$. Let the data signal transmit power be a function of the received busy signal power,

$$T_i^d = f\left(I_i^b\right).$$ (3)

The higher the received busy signal power, the lower the data signal power in order to avoid high interference at the vulnerable receiver. Therefore, one possible solution for $f(I_i^b)$ is,

$$T_i^d = \min\left\{\frac{c}{I_i^b}, T_{max}^d\right\},$$ (4)

where c is a constant. In order to avoid a singularity in case no interference is present, $I_i^b \to 0$, $T_i^d$ is upper bounded by a maximum transmit power $T_{max}^d$.

Equation 4 establishes a relation between the received busy signal power from the vulnerable receiver $Rx_n$ and the transmitted data power from $Tx_i$ addressing the adjustments of the busy signal transmit power $T_n^b$ of $Rx_n$, assuming that all transmitters in the network set their transmit power according to Equation 4, Equation 2 is substituted into Equation 4,

$$T_i^d = \min\left\{\frac{cL_{n,i}}{T_n^b}, T_{max}^d\right\}.$$ (5)

Transmitter $Tx_i$ serving link (i,j) is also a potential source of interference for link (m,n). This is expressed by the interference $I_i^b$ received by receiver $Rx_n$,

$$I_n^d = \frac{T_i^d}{L_{i,n}}.$$ (6)

Substituting Equation 5 into Equation 6 results in,

$$I_n^d = \min\left\{\frac{cL_{n,i}}{T_n^b L_{i,n}}, T_{max}^d\right\}.$$ (7)

Due to channel reciprocity in TDD,

$$L_{n,J} = L_{j,n} \cdot \tag{8}$$

as a consequence,

$$I_n^d = \min\left\{\frac{c}{T_n^b}, T_{\max}^d\right\} \cdot \tag{9}$$

This means, if any other transmitter $Tx_i$ sets its data transmit power according to Equation 4 inversely proportional to the received busy signal power, then the interference experienced by the data receiver $Rx_n$ is $I_n^d$. This mechanism allows every data receiver in the network to independently control the interference it can tolerate via the busy tone transmit power. A direct relationship between the interference power, $I_n^d$, and the used busy signal transmit power exists,

$$T_n^b = \frac{c}{I_n^d} \cdot \tag{10}$$

The maximum tolerable interference depends on the received useful power, i.e. the payload reception power, and the required signal-to-interference-and-noise-ratio, which in turn is derived from some predefined quality of service constraints. An implicit power-based signalling mechanism as an embodiment of the present invention, which is independent of the actual pathloss as long as channel reciprocity is guaranteed, yields an interference and radio resource management instrument. In order to determine the constant c, which is valid and broadcast across the entire network, it is considered

$$c = I_{\min} \cdot T_{\max}^b , \tag{11}$$

where $I_{min}$ is the receiver sensitivity and $T_{max}^b$ is the maximum possible busy signal transmit power.

$$I_{\min} = k \vartheta B , \tag{12}$$

where k is the Boltzmann constant in Joule per Kelvin, 9 is the ambient temperature in Kelvin, and B is the bandwidth in Hz.
Assuming that the data receiver $Rx_n$ requires a signal-to-interference-and-noise-ratio of $\gamma$, and the useful power received at this receiver is $R_n^d$, it follows that the maximum tolerable interference is,

$$I_{tol} = \frac{R_n^d}{\gamma} \cdot \tag{13}$$

This receiver adjusts its busy burst transmit power, $T_n^b$ as follows,

$$T_n^b = \min\left\{\frac{c}{I_{tol}}, T_{max}^b\right\} = \min\left\{\frac{c\gamma}{R_n^d}, T_{max}^b\right\}. \qquad (14)$$

where $T_{max}^b$ is the maximum busy signal power.

Summarizing the method in one embodiment of the present invention, the interference tolerance signalling is as follows:

1. Transmitter $Tx_m$ is connected with a receiver $Rx_n$ on link (m, n) using the transmit power $T_m^d$;

2. The data receiver $Rx_n$ sets its busy signal power according to Equation 14;

3. After measuring the busy signal interference $I_i^b$ from a vulnerable receiver $Rx_n$, transmitter $Tx_i$ adjusts its power according to Equation 4 in order to establish the link from $Tx_i$ to $Rx_j$, denoted as (i, j);

4. Provided a successful reception of the payload data, $Rx_j$ protects the link (i, j) by transmitting a busy signal with a transmit power according to Equation 14.

In one embodiment of the present invention, the transmit powers of the transmitters $Tx_m$ and $Tx_i$ stay constant for the time of the link to their corresponding receivers being established and are only set initially for their first access. In another embodiment of the present invention, the transmission powers of all transmitters are dynamically adjusted according to Equation 4, meaning that the transmit powers of the transmitters are readjusted if additional busy signal power from vulnerable receivers is received or interference conditions changed. According to Equation 14, the receivers adjust their busy signal transmit powers in dependence on the reception power of the payload data signals of their intended transmitters. In another embodiment of the present invention, the receivers adjust their busy signal transmission powers on the basis of their allowable interference level they can tolerate.

In order to avoid instability, the target signal-to-interference-and-noise-ratio $\gamma$ should be carefully chosen. The actually experienced interference at the receiver $I_n^d$ of Equation 9 may be utilized to make nodes more cautious. In case the actual interference in Equation 9 exceeds the tolerable interference of Equation 13, so that $I_n^d \gg I_{tol}$, it would be preferable to either disconnect or to lower its own signal-to-interference-and-noise-ratio requirements. The latter case can be achieved with another embodiment of the present invention, by combination of including information for link adaptation, piggy packed on the busy signal. In addition, a more cautious receiver could adjust its busy signal power by

$$T_n^b = \min\left\{\frac{c\gamma}{R_n^d}, \frac{c}{I_n^d}, T_{max}^b\right\}, \qquad (15)$$

which is the minimum of Equation 14 and Equation 10. By adjusting the busy signal power according to Equation 15 instead of Equation 14, nodes would compromise their own quality of service requirements in high interference scenarios, which might give other links the chance to maintain their transmission with reasonable performance.

The working mechanism is now demonstrated in detail using an example depicted in Fig. 14.

Fig. 14 shows an example scenario with two transmitters Tx1 and Tx3 and two receivers Rx2 and Rx4. The pathloss of the radio channel between transmitter Tx1 and receiver Rx2 is $L_{1,2}$. At the receiver Rx2, the payload signal transmitted by Tx1 is received with reception power R2. In turn, the receiver Rx2 transmits a busy burst transmit power

$T_2^b$ . Between the receiver Rx2 and the transmitter Tx3 occurs a pathloss $L_{2,3}$. At the transmitter Tx3, the busy burst transmitted by the receiver Rx2 is received with reception power $I_3^b$ . The transmitter Tx3 communicates with the receiver Rx4 through a radio channel $L_{3,4}$. The transmitter Tx3 transmits data towards Rx4 with a transmission power of $T_3^d$ . In Fig. 14, the hearability region of the busy signal transmitted by Rx2 is indicated by the grey area. In order to explain the mechanism in detail, the parameters listed in Table 1 are assumed.

**TABLE 1**

| PARAMETERS OF THE EXAMPLE SCENARIO | | |
|---|---|---|
| Pathloss between Tx1 and Rx2 (intended link) [dB] | $L_{1,2}$ | 50 |
| Transmit power of Tx1 [dBm] | $T_1^d$ | 10 |
| Boltzmann constant [J/K] | $k$ | 1.38066·10$^{-23}$ |
| Ambient temperature [K] | $\vartheta$ | 293 |
| Bandwidth [MHz] | $B$ | 100 |
| Maximum busy tone transmit power [dBm] | $T_{max}^b$ | 30 |

From the parameters in Table 1, the constant c can be derived according to Equation 11, c=-63.93dBm$^2$.

The pathloss $L_{3,2}$, between Tx3 and Rx2, which is the interfering link, is varied between 40dB - 120dB, i.e. a special case is covered where the pathloss of the intended link, $L_{1,2}$=50dB, is higher than the pathloss on the link between interfering transmitter Tx3 and a vulnerable receiver Rx2, $L_{3,2}$. Furthermore, the required signal-to-interference-and-noise-ratio $\gamma$ is varied from 4dB to 25dB in order to model different link capacity scenarios to be exploited by means of adaptive modulation.

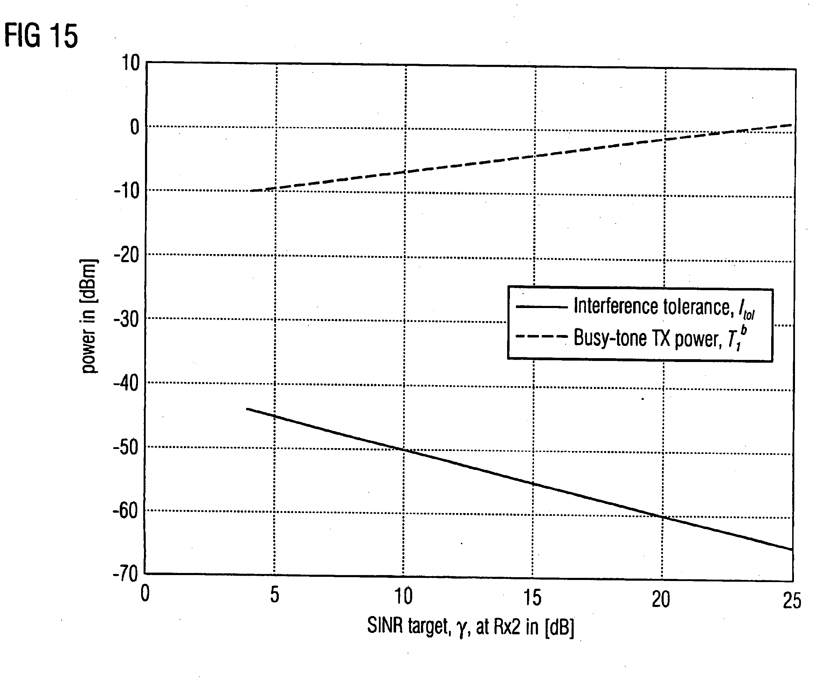

Fig. 15 shows a viewgraph, where power is shown on the abscissa and the signal-to-interference-and-noise-ratio (SINR) target $\gamma$ at Rx2 is shown on the ordinate. The interference tolerance is shown as a solid viewgraph, and the busy tone transmit power is shown as the dotted viewgraph. The maximum tolerable interference is plotted using Equation 13, where the useful power is 10dBm-50dB=-40dBm. The busy tone transmit power, $T_1^b$ , is plotted using Equation 14. Clearly, both values are independent of the pathloss between Rx2 and Tx3 as shown in Fig. 14. As expected, the higher the required signal-to-interference-and-noise-ratio, the lower the tolerable interference at Rx2, and the higher the busy burst transmit power. Although the maximum allowed busy burst power is 30dBm, the maximum value ranges around only 0dBm.

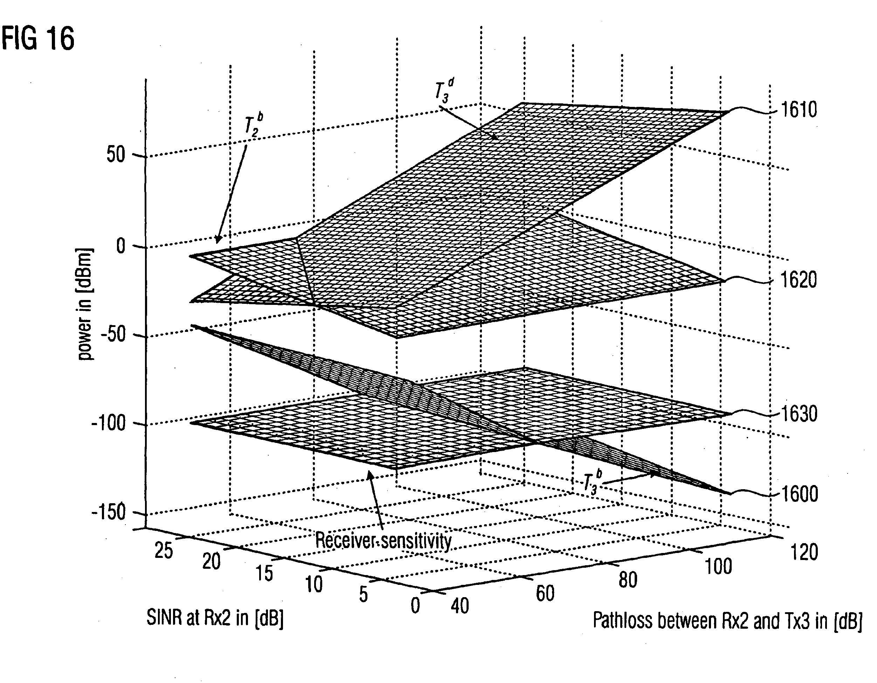

The viewgraph shown in Fig. 16 is three-dimensional. It shows power versus the signal-to-interference-and-noise-ratio $\gamma$ required at Rx2 and the pathloss between receiver Rx2 and transmitter Tx3. Moreover, Fig. 16 shows four planes, the first one is shown for the received busy tone power at Tx3 from Rx2, $I_3^b$ 1600 determined using Equation 2, the maximum possible data transmit power for Tx3 to maintain the signal-to-interference-and-noise-ratio target at Rx2, $T_3^d$ 1610 determined using Equation 4, the busy tone transmit power of Rx2, $T_2^b$ 1620 determined using Equation 14, and a receiver sensitivity level 1630 determined using Equation 12.

It can be seen in Fig. 16 that in almost all the cases, the data transmit power can be larger than the busy tone transmit power. Only for high signal-to-interference-and-noise-ratio targets $\gamma$ and a low pathloss between the receiver Rx2 and the transmitter Tx3, i.e. the case when the pathloss on the intended link is higher than the pathloss on the link between victim receiver Rx2 and neighbouring transmitter Tx3, the allowed data transmit power is lower than the busy burst transmit power, but still, the busy burst power is 30dB lower than the maximum. Furthermore, the busy burst power is 10dB less than the data transmit power on the desired link, which is 10dBm. The only significant implication is that for these particular cases, high signal-to-interference-and-noise-ratio target, low pathloss between transmitter Tx3 and receiver Rx2, the link between transmitter Tx3 and receiver Rx4 can only be served if it has a low pathloss, and/or low signal-to-interference-and-noise-ratio requirement and/or low interference at receiver Rx4. Without the need for a central controller, the respective transmitter will find out, whether one of these conditions holds due to the present invention.

In another embodiment of the present invention, the method of busy burst transmit power and payload data transmit power adjustment is combined with the busy tone explicit signalling of control information for rate adaptation on the intended link. Using the two embodiments together will provide a very powerful self-organizing, decentralized interference aware link adaptation mechanism. Also, the combination of including information for link adaptation for the intended link and information for other transmitters as, for example, a relative priority, and the power adjustment for busy tone and payload signal transmission power together provide a very effective means for decentralized radio resource management.

**Claims**

1. Receiver apparatus (200) having a transceiver functionality, comprising:

   a receiver module (210) for receiving a payload signal during a payload signal time slot of a first radio frame and an adjusted payload signal during the payload signal time slot of a second radio frame;
   a quality estimator (220) for estimating a reception quality of the received payload signal; and
   a busy signal transmitter (230) for transmitting a variable busy signal in a predefined busy signal time slot associated with the payload signal time slot,
   when the reception quality is above a quality threshold, the busy signal transmitter being adapted for generating the variable busy signal such that the busy signal includes link adaptation information being dependent on an actual reception quality,
   the receiver apparatus being **characterized in that** the busy signal transmitter (230) is further adapted for transmitting a busy signal in the busy signal time slot even when a payload signal in the associated payload signal time slot is received with a poor reception quality, wherein the busy signal in this busy signal time slot includes link adaption information requesting a reduction of the transmission rate,
   wherein the busy signal transmitter (230) is adapted for continuing this process until a payload signal in a later payload signal time slot within a maximum time-out limit is received with an acceptable reception quality, and wherein this process is stopped when a payload signal is not received with an acceptable quality within the maximum time-out limit,
   and
   wherein, when the payload signal in the later payload signal time slot is received with the acceptable quality within the maximum time-out limit, the busy signal associated with the later payload signal time slot includes link adaption information requesting a maintaining or increase of the transmission rate.

2. Receiver apparatus (200) of claim 1, wherein the busy signal transmitter (230) is adapted for generating the busy signal such that it includes information upon which the reception quality of the payload signal improves, when the quality of the received payload signal is below a second quality threshold or
   to generate the busy signal such that it includes information upon which the reception quality of the payload signal decreases, when the reception quality of the received payload signal is above a second quality threshold.

3. Receiver apparatus (200) of one of the claims 1 or 2, wherein the busy signal transmitter (230) is adapted for adjusting a transmission power of the busy signal on the basis of the payload reception quality, a payload reception power or a received interference power.

4. Receiver apparatus (200) of one of the claims 1 to 3, wherein the busy signal transmitter is adapted for including status information about the receiver apparatus (200), about a transmitter or a received interference in the busy signal.

5. Receiver apparatus (200) of one of the claims 1 to 4, wherein the busy signal transmitter (230) is adapted for including an instruction with respect to a transmission characteristic in the busy signal.

6. Receiver apparatus (200) of one of the claims 1 to 5, wherein the transmission characteristic refers to at least one of or a combination of the group of a transmission power, a payload signal time slot, a carrier frequency, a sub-channel, a code rate, a modulation scheme, a set of modulation symbols, a spreading or scrambling code, an antenna, an antenna beam, or a set of sub-carriers.

7. Receiver apparatus (200) of one of the claims 1 to 6, wherein the busy signal transmitter (230) is adapted for including a user or a service priority in the busy signal being served in an associated payload signal time slot.

8. Receiver apparatus (200) of one of the claims 1 to 7, wherein the busy signal transmitter (230) is adapted for transmitting a busy signal in a predefined busy signal time slot associated with a payload signal time slot, when the reception quality is above a quality threshold, the busy signal transmitter (230) being adapted for generating the busy signal such that the busy signal includes information dependent on the reception quality of the payload signal receiver, a status of the transmitter of the payload signal, or of the associated payload signal time slot or a different payload signal time slot.

**9.** Receiver apparatus (200) of one of the claims 1 to 8, wherein the receiver apparatus (200) further comprises a controller module (430) for determining information on an allowable interference power and the busy signal transmitter (230) being adapted for including information on an allowable interference power or a payload signal reception power in a payload signal time slot in the busy signal.

**10.** Receiver apparatus (200) of claim 9, wherein the busy signal transmitter (230) is adapted for adjusting the busy signal transmit power dependent on the received interference power.

**11.** Method for receiving, comprising the following steps:

receiving a payload signal in a payload signal time slot of a first radio frame;
estimating a reception quality of the received payload signal;
transmitting a variable busy signal in a predefined busy signal time slot associated with the payload signal time slot, when the reception quality is above a quality threshold, the busy signal transmitter being adapted for generating the variable busy signal such that the busy signal includes link adaptation information being dependent on an actual reception quality; and
receiving an adjusted payload signal during the payload signal time slot of a second radio frame,
the method being **characterized in that** the step of transmitting a variable busy signal further comprises transmitting a busy signal in the busy signal time slot even when a payload signal in the associated payload signal time slot is received with a poor reception quality, wherein the busy signal in this busy signal time slot includes link adaption information requesting a reduction of the transmission rate,
wherein this process is continued until a payload signal in a later payload signal time slot within a maximum time-out limit is received with an acceptable reception quality, and wherein this process is stopped when a payload signal is not received with an acceptable quality within the maximum time-out limit, and
wherein, when the payload signal in the later payload signal time slot is received with the acceptable quality within the maximum time-out limit, the busy signal associated with the later payload signal time slot includes link adaption information requesting a maintaining or increase of the transmission rate.

**12.** Computer program having a program code for performing all the steps of the method of claim 11 when the program code runs on a computer.

## Patentansprüche

**1.** Empfängervorrichtung (200) mit einer Sende-Empfangs-Gerätefunktionalität, die folgende Merkmale aufweist:

ein Empfängermodul (210) zum Empfangen eines Nutzlastsignals während eines Nutzlastsignalzeitschlitzes eines ersten Funkrahmens und eines eingestellten Nutzlastsignals während des Nutzlastsignalzeitschlitzes eines zweiten Funkrahmens;
eine Qualitätsschätzeinrichtung (220) zum Schätzen einer Empfangsqualität des empfangenen Nutzlastsignals; und
einen Aktiv-Signal-Sender (230) zum Senden eines variablen Aktiv-Signals in einem vordefinierten Aktiv-Signal-Zeitschlitz, der dem Nutzlastsignalzeitschlitz zugeordnet ist, wenn die Empfangsqualität über einer Qualitätsschwelle ist, wobei der Aktiv-Signal-Sender zum Erzeugen des variablen Aktiv-Signals derart angepasst ist, dass das Aktiv-Signal Verknüpfungsanpassungsinformationen umfasst, die von einer tatsächlichen Empfangsqualität abhängen,
wobei die Empfängervorrichtung **dadurch gekennzeichnet ist, dass** der Aktiv-Signal-Sender ferner angepasst ist zum Senden eines Aktiv-Signals in dem Aktiv-Signal-Zeitschlitz, sogar wenn ein Nutzlastsignal in dem zugeordneten Nutzlastsignalzeitschlitz mit einer schlechten Empfangsqualität empfangen wird, wobei das Aktiv-Signal in diesem Aktiv-Signal-Zeitschlitz Verknüpfungsanpassungsinformationen umfasst, die eine Reduzierung der Übertragungsrate anfordern,
wobei der Aktiv-Signal-Sender (230) angepasst ist zum Fortsetzen dieses Prozesses, bis ein Nutzlastsignal in einem späteren Nutzlastsignalzeitschlitz innerhalb einer maximalen Zeitabschaltgrenze mit einer akzeptablen Empfangsqualität empfangen wird, und wobei dieser Prozess gestoppt wird, wenn ein Nutzlastsignal nicht mit einer akzeptablen Qualität innerhalb der maximalen Zeitabschaltgrenze empfangen wird, und wobei, wenn das Nutzlastsignal in dem späteren Nutzlastsignalzeitschlitz mit der akzeptablen Qualität innerhalb der maximalen Zeitabschaltgrenze empfangen wird, das Aktiv-Signal, das dem späteren Nutzlastsignalzeitschlitz zugeordnet ist, Verknüpfungsanpassungsinformationen umfasst, die ein Beibehalten oder Erhöhen der Übertragungsrate anfordern.

2. Empfängervorrichtung (200) gemäß Anspruch 1, bei der der Aktiv-Signal-Sender (230) zum Erzeugen des Aktiv-Signals derart angepasst ist, dass es Informationen umfasst, auf die hin sich die Empfangsqualität des Nutzlastsignals verbessert, wenn die Qualität des empfangenen Nutzlastsignals unter einer zweiten Qualitätsschwelle ist oder um das Aktiv-Signal derart zu erzeugen, dass es Informationen umfasst, auf die hin sich die Empfangsqualität des Nutzlastsignals verringert, wenn die Empfangsqualität des empfangenen Nutzlastsignals über einer zweiten Qualitätsschwelle ist.

3. Empfängervorrichtung (200) gemäß einem der Ansprüche 1 oder 2, bei der der Aktiv-Signal-Sender (230) zum Einstellen einer Sendeleistung des Aktiv-Signals auf der Basis der Nutzlastempfangsqualität, einer Nutzlastempfangsleistung oder einer empfangenen Interferenzleistung angepasst ist.

4. Empfängervorrichtung (200) gemäß einem der Ansprüche 1 bis 3, bei der der Aktiv-Signal-Sender zum Integrieren von Statusinformationen über die Empfängervorrichtung (200), über einen Sender oder eine Empfangsinterferenz in das Aktiv-Signal angepasst ist.

5. Empfängervorrichtung (200) gemäß einem der Ansprüche 1 bis 4, bei der der Aktiv-Signal-Sender (230) zum Integrieren einer Anweisung im Hinblick auf eine Übertragungscharakteristik in das Aktiv-Signal angepasst ist.

6. Empfängervorrichtung (200) gemäß einem der Ansprüche 1 bis 5, bei der die Sendecharakteristik sich auf zumindest eines aus oder eine Kombination aus der Gruppe bezieht, bestehend aus: einer Sendeleistung, einem Nutzlastsignalzeitschlitz, einer Trägerfrequenz, einem Teilkanal, einer Coderate, einem Modulationsschema, einem Satz aus Modulationssymbolen, einem Ausbreit- oder Zerhackcode, einer Antenne, einem Antennenstrahl oder einem Satz aus Teilträgern.

7. Empfängervorrichtung (200) gemäß einem der Ansprüche 1 bis 6, bei der der Aktiv-Signal-Sender (230) zum Integrieren einer Benutzer- oder einer Dienstpriorität in das Aktiv-Signal angepasst ist, das in einem zugeordneten Nutzlastsignalzeitschlitz geliefert wird.

8. Empfängervorrichtung (200) gemäß einem der Ansprüche 1 bis 7, bei der der Aktiv-Signal-Sender (230) zum Senden eines Aktiv-Signals in einem vordefinierten Aktiv-Signal-Zeitschlitz angepasst ist, der dem Nutzlastsignalzeitschlitz zugeordnet ist, wenn die Empfangsqualität über einer Qualitätsschwelle ist, wobei der Aktiv-Signal-Sender (230) zum Erzeugen des Aktiv-Signals derart angepasst ist, dass das Aktiv-Signal Informationen umfasst, abhängig von der Empfangsqualität des Nutzlastsignalempfängers, einem Status des Senders des Nutzlastsignals oder von dem zugeordneten Nutzlastsignalzeitschlitz oder einem unterschiedlichen Nutzlastsignalzeitschlitz.

9. Empfängervorrichtung (200) gemäß einem der Ansprüche 1 bis 8, wobei die Empfängervorrichtung (200) ferner ein Steuerungsmodul (430) zum Bestimmen von Informationen über eine zulässige Interferenzleistung aufweist und der Aktiv-Signal-Sender (230) zum Integrieren von Informationen über eine zulässige Interferenzleistung oder eine Nutzlastsignalempfangsleistung in einem Nutzlastsignalzeitschlitz in dem Aktiv-Signal angepasst ist.

10. Empfängervorrichtung (200) gemäß Anspruch 9, bei der der Aktiv-Signal-Sender (230) zum Einstellen der Aktiv-Signal-Sendeleistung abhängig von der empfangenen Interferenzleistung angepasst ist.

11. Verfahren zum Empfangen, das folgende Schritte aufweist:

Empfangen eines Nutzlastsignals in einem Nutzlastsignalzeitschlitz eines ersten Funkrahmens;
Schätzen einer Empfangsqualität des empfangenen Nutzlastsignals;
Senden eines variablen Aktiv-Signals in einem vordefinierten Aktiv-Signal-Zeitschlitz, der dem Nutzlastsignalzeitschlitz zugeordnet ist, wenn die Empfangsqualität über einer Qualitätsschwelle ist, wobei der Aktiv-Signal-Sender zum Erzeugen des variablen Aktiv-Signals derart angepasst ist, dass das Aktiv-Signal Verknüp-fungsanpassungsinformationen umfasst, die von der tatsächlichen Empfangsqualität abhängen;und

Empfangen eines eingestellten Nutzlastsignals während des Nutzlastsignalzeitschlitzes eines zweiten Funkrahmens,

wobei das Verfahren **dadurch gekennzeichnet ist, dass** der Schritt des Sendens eines variablen Aktiv-Signals ferner das Senden eines Aktiv-Signals in dem Aktiv-Signal-Zeitschlitz aufweist, sogar wenn ein Nutzlastsignal in dem zugeordneten Nutzlastsignalzeitschlitz mit einer schlechten Empfangsqualität empfangen wird, wobei das Aktiv-Signal in diesem Aktiv-Signal-Zeitschlitz Verknüpfungsanpassungsinformationen umfasst, die eine Reduzierung der Senderate anfordern,

wobei dieser Prozess fortgesetzt wird, bis ein Nutzlastsignal in einem späteren Nutzlastsignalzeitschlitz innerhalb einer maximalen Zeitabschaltgrenze mit einer akzeptablen Empfangsqualität empfangen wird, und wobei dieser Prozess gestoppt wird, wenn ein Nutzlastsignal nicht mit einer akzeptablen Qualität innerhalb der maximalen Zeitabschaltgrenze empfangen wird, und

wobei, wenn das Nutzlastsignal in dem späteren Nutzlastsignalzeitschlitz mit der akzeptablen Qualität innerhalb der maximalen Zeitabschaltgrenze empfangen wird,

das Aktiv-Signal, das dem späteren Nutzlastsignalzeitschlitz zugeordnet ist, Verknüpfungsanpassungsinformationen umfasst, die ein Beibehalten oder ein Erhöhen der Senderate anfordern.

12. Computerprogramm mit einem Programmcode zum Ausführen aller Schritte des Verfahrens gemäß Anspruch 11, wenn der Programmcode auf einem Computer ausgeführt wird.

**Revendications**

1. Appareil récepteur (200) ayant une fonctionnalité d'émetteurrécepteur, comprenant:

   un modèle récepteur (210) destiné à recevoir un signal de charge utile pendant un intervalle de temps de signal de charge utile d'une première trame de radiofréquence et un signal de charge utile ajusté pendant l'intervalle de temps de signal de charge utile d'une deuxième trame de radiofréquence;
   un estimateur de qualité (220) destiné à estimer une qualité de réception du signal de charge utile reçu; et
   un émetteur de signal occupé (230) destiné à émettre un signal occupé variable dans un intervalle de temps de signal occupé prédéfini associé à l'intervalle de temps du signal de charge utile,
   lorsque la qualité de réception est au-dessous d'un seuil de qualité, l'émetteur de signal occupé étant adapté pour générer le signal occupé variable de sorte que le signal occupé comporte des informations d'adaptation de liaison en fonction d'une qualité de réception réel,
   l'appareil récepteur étant **caractérisé par le fait que** l'émetteur de signal occupé (230) est par ailleurs adapté pour émettre un signal occupé dans l'intervalle de temps de signal occupé, même lorsqu'un signal de charge utile dans l'intervalle de temps de signal de charge utile associé est reçu avec une qualité de réception médiocre, où le signal occupé dans cet intervalle de temps de signal occupé comporte des informations d'adaptation de liaison demandant une réduction de la vitesse de transmission,
   dans lequel l'émetteur de signal occupé (230) est adapté pour continuer ce processus jusqu'à ce qu'un signal de charge utile dans un intervalle de temps de signal de charge utile ultérieur dans une limite de temps mort maximum soit reçu avec une qualité de réception acceptable, et où ce processus est arrêté lorsqu'un signal de charge utile n'est pas reçu avec une qualité acceptable dans la limite de temps maximum, et
   dans lequel, lorsque le signal de charge utile dans l'intervalle de temps de signal de charge utile ultérieur est reçu avec la qualité acceptable dans la limite de temps mort maximum, le signal occupé associé à l'intervalle de temps de signal de charge utile ultérieur comporte des informations d'adaptation de liaison demandant un maintien ou une augmentation de la vitesse de transmission.

2. Appareil récepteur (200) selon revendication 1, dans lequel l'émetteur de signal occupé (230) est adapté pour générer le signal occupé de sorte qu'il comporte des informations à la suite desquelles la qualité de réception du signal de charge utile améliore lorsque la qualité du signal de charge utile reçu est au-dessous d'un deuxième seuil de qualité, ou
   pour générer le signal occupé de sorte qu'il comporte des informations à la suite desquelles la qualité de réception du signal de charge utile diminue lorsque la qualité de réception du signal de charge utile reçu est au-dessous d'un deuxième seuil de qualité.

3. Appareil récepteur (200) selon l'une des revendications 1 ou 2, dans lequel l'émetteur de signal occupé (230) est adapté pour ajuster une puissance de transmission du signal occupé sur base de la qualité de réception de la charge utile, d'une puissance de réception de charge utile ou d'une puissance d'interférence reçue.

**4.** Appareil récepteur (200) selon l'une des revendications 1 à 3, dans lequel l'émetteur de signal occupé est adapté pour comporter des informations de statut sur l'appareil récepteur (200), sur un émetteur ou une interférence reçue dans le signal occupé.

**5.** Appareil récepteur (200) selon l'une des revendications 1 à 4, dans lequel l'émetteur de signal occupé (230) est adapté pour comporter une instruction en ce qui concerne une caractéristique de transmission dans le signal occupé.

**6.** Appareil récepteur (200) selon l'une des revendications 1 à 5, dans lequel la caractéristique de transmission se réfère à au moins l'un ou une combinaison parmi le groupe d'une puissance de transmission, d'un intervalle de temps de signal de charge utile, d'une fréquence porteuse, d'un sous-canal, d'une vitesse de codage, d'un schéma de modulation, d'un ensemble de symboles de modulation, d'un code de dispersion ou d'entremêlement, d'une antenne, d'un faisceau d'antennes, ou d'un ensemble de sous-porteuses.

**7.** Appareil récepteur (200) selon l'une des revendications 1 à 6, dans lequel l'émetteur de signal occupé (230) est adapté pour inclure une priorité d'utilisateur ou de service dans le signal occupé servi dans un intervalle de temps de signal de charge utile associé.

**8.** Appareil récepteur (200) selon l'une des revendications 1 à 7, dans lequel l'émetteur de signal occupé (230) est adapté pour émettre un signal occupé dans un intervalle de temps de signal occupé prédéfini associé à un intervalle de temps de signal de charge utile, lorsque la qualité de réception est au-dessous d'un seuil de qualité, l'émetteur de signal occupé (230) étant adapté pour générer le signal occupé de sorte que le signal occupé comporte des informations fonction de la qualité de réception du récepteur de signal de charge utile, d'un statut de l'émetteur du signal de charge utile, ou de l'intervalle de temps de signal de charge utile associé ou d'un intervalle de temps de signal de charge utile différent.

**9.** Appareil récepteur (200) selon l'une des revendications 1 à 8 dans lequel l'appareil récepteur (200) comprend par ailleurs un modèle de contrôleur (430) destiné à déterminer les informations sur une puissance d'interférence admissible et l'émetteur de signal occupé (230) étant adapté pour comporter des informations sur une puissance d'interférence admissible ou une puissance de réception de signal de charge utile, dans un intervalle de temps de signal de charge utile dans le signal occupé.

**10.** Appareil récepteur (200) selon la revendication 9, dans lequel l'émetteur de signal occupé (230) est adapté pour ajuster la puissance d'émission de signal occupé en fonction de la puissance d'interférence reçue.

**11.** Procédé pour recevoir, comprenant les étapes suivantes consistant à:

recevoir un signal de charge utile dans un intervalle de temps de charge utile d'une première trame de radiofréquence;
estimer une qualité de réception du signal de charge utile reçu;
émettre un signal occupé variable dans un intervalle de temps de signal occupé prédéfini associé à l'intervalle de temps de signal de charge utile, lorsque la qualité de réception est au-dessous d'un seuil de qualité, l'émetteur de signal occupé étant adapté pour générer le signal occupé variable de sorte que le signal occupé comporte une information d'adaptation de liaison en fonction d'une qualité de réception réelle; et
recevoir un signal de charge utile ajusté pendant l'intervalle de temps de charge utile d'une deuxième trame de radiofréquence,
le procédé étant **caractérisé par le fait que** l'étape consistant à émettre un signal occupé variable comprend par ailleurs le fait de transmettre un signal occupé dans l'intervalle de signal occupé,
même quand un signal de charge utile dans l'intervalle de temps de signal de charge utile associé est reçu avec une qualité de réception médiocre, où le signal occupé dans cet intervalle de temps de signal occupé comporte une information d'adaptation de liaison demandant une réduction de la vitesse de transmission,
dans lequel ce processus est continué jusqu'à ce qu'un signal de charge utile dans un intervalle de temps de signal de charge utile ultérieur dans une limite de temps mort maximum est reçu avec une qualité de réception acceptable, et dans lequel ce processus est arrêté lorsqu'un signal de charge utile n'est pas reçu avec une qualité acceptable dans la limite de temps mort maximum, et
dans lequel, lorsque le signal de charge utile dans l'intervalle de temps de signal de charge utile ultérieur est reçu avec la qualité acceptable dans la limite de temps mort maximum, le signal occupé associé à l'intervalle de temps de signal de charge utile ultérieur comporte une information d'adaptation de liaison demandant un maintien ou une augmentation de la vitesse de transmission.

**12.** Programme d'ordinateur ayant un code de programme pour réaliser toutes les étapes de procédé selon la revendication 11 lorsque le code de programme est exécuté sur un ordinateur.

FIG 1

FIG 2

# FIG 3

## FIG 4

**FIG 5**

Receiver listens for a data block in the *i*-th timeslot of the TDMA frame — S1

Data received? — S2
- No → Do not broadcast a busy burst in the *i*-th minislot — S4
- Yes ↓

Quality acceptable? — S5
- Yes → Broadcast a busy burst in the *i*-th minislot requesting a zero or more increase in transmission rate — S6a
- No → Lower transmission rate permissible? — S7

Lower transmission rate permissible? — S7
- No → Do not broadcast a busy burst in the *i*-th minislot — S4
- Yes → Broadcast a busy burst in the *i*-th minislot requesting a lower rate transmission format — S6b

EP 1 855 423 B1

# FIG 6

a)

600    600    600

610   620

→ t

b)

Timeout

Reservation aborted

600

→ t

▓▓▓▓▓ Poor BER Packet          ▓ Lower rate

‖‖‖‖‖ Good BER Packet          ‖‖ Maintain or increase rate

**FIG 7**

Data block scheduled
for transmission in the
$n$-th timeslot of the $i$-th    S1
TDMA frame?

↓

Listen to the
$n$-th minislot of the    S2
$(i-1)$-th TDMA frame

↓

S3
Strong busy
burst    — Yes →    Determine interference
tolerance of most    S11
detected?    Vulnerable receiver

No ←

S4    Transmit block in $n$-th timeslot
of the $i$-th TDMA frame
and STBS

↓

S6    Listen to the
$n$-th minislot of the
$i$-th TDMA frame    Adjust transmit power
accordingly    S12

↓

S14    Adjust PHY
mode accordingly    ← Yes —    S13
Change in
rate
requested?    — Yes →    S7
Strong
busy burst
detected from
intended
receiver?    — No →    S9
Empty
buffer?    — No →

Reservation mode    No ↓    Yes ↓    Yes ↓

Transmit next block in $n$-th
timeslot of the $(i+1)$-th    ← S8    S10    Wait for
new data    Reschedule    S5
TDMA frame and STBS

EP 1 855 423 B1

**FIG 8**

Data block transmitted in the n-th timeslot of the i-th TDMA frame and transmitter buffer not empty — S1

Listen to the n-th minislot of the *i*-th TDMA frame — S2

Strong busy burst detected from intended receiver? — S3

Strong busy burst detected from vulnerable receivers? — S8

Empty buffer? — S5

Enter contention mode and reschedule — S6

Wait for new data — S7

Determine interference tolerance of most vulnerable receiver — S9

Adjust transmit power accordingly — S10

Change in rate requested? — S11

Adjust PHY mode accordingly — S12

Transmit next block in *n*-th timeslot of the (*i*+1)-th TDMA frame and STBS — S4

EP 1 855 423 B1

**FIG 9**

900

910

Tx₂

Busy burst
Transmit
Power

930

940

920

High interference
tolerance

Low interference
tolerance

(a): Hearability region for low interference tolerance
(b): Hearability region for high interference tolerance

EP 1 855 423 B1

# FIG 10

Hearability region of busy signal

1010

Receiver

Piggy-pack interferer intended information

1000

Data

Busy-Signal

Piggy-pack transmitter intended information

+

Other Transmitter

1030

1020

Transmitter

EP 1 855 423 B1

FIG11

FIG12

Idle Slot
Transmission
Low Tx power
Reception

No Busy burst
Busy burst

Transmission
Interference
Busy burst hearability

EP 1 855 423 B1

FIG 13

FIG 14

EP 1 855 423 B1

FIG 15

EP 1 855 423 B1

FIG 16

EP 1 855 423 B1

# FIG 17

```
                                    ┌──────────────────────────┐
                                    │   Data block scheduled   │
                                    │ for transmission in the n-th │  S1
                                    │ timeslot of the i-th TDMA frame? │
                                    └──────────────────────────┘
                                                  │
                                                  ▼
                                    ┌──────────────────────────┐
                                    │   Listen to the n-th minislot │  S2
                                    │   of the (i-1)-th TDMA frame │
                                    └──────────────────────────┘
                                                  │
                                                  ▼
                                              ◇ S3
    ┌──────────────────────────┐ No      Strong busy        Yes
 S4 │ Transmit block in n-th timeslot of │◄──── burst ────────────►
    │ the i-th TDMA frame and STBS* │       detected?
    └──────────────────────────┘
                  │
                  ▼
    ┌──────────────────────────┐
 S6 │   Lasten to the n-th minislot │
    │   of the i-th TDMA frame │
    └──────────────────────────┘
```

Transmit block in n-th timeslot of the i-th TDMA frame and STBS* — S4

Listen to the n-th minislot of the i-th TDMA frame — S6

Reservation mode

Transmit next block in n-th timeslot of the (i+1)-th TDMA frame and STBS* — S8

Strong busy burst detected from intended receiver? — S7

Empty buffer? — S9

Reschedule — S5

Wait for new data — S10

*STBS = signal transmitter buffer state

EP 1 855 423 B1

# FIG 18

EP 1 855 423 B1

```
┌─────────────────────────┐
│   Data block transmitted in   │
│  the n-th timeslot of the i-th │   S1
│  TDMA frame and transmitter    │
│      buffer not empty          │
└─────────────────────────┘
            │
            ▼
┌─────────────────────────┐
│   Listen to the n-th minislot  │   S2
│    of the i-th TDMA frame       │
└─────────────────────────┘
            │
            ▼
          ◇ S3
   Strong busy burst detected from intended receiver?
```

Transmit block in n-th timeslot of the (i+1)-th TDMA frame and STBS*   S4

Yes

Strong busy burst detected from intended receiver?   S3

No

Empty buffer?   S5

No

Yes

Wait for new data   S7

Enter contention mode and reschedule   S6

*STBS=signal transmitter buffer state

## FIG 19

```
          ┌──────────────────────────┐
          │ Receiver listens for a data │
          │ block in the i-th timeslot │  S1
          │    of the TDMA frame       │
          └──────────────────────────┘
```

Data received? — S2 (No / Yes)

Quality acceptable? — S3 (No / Yes)

Do not broadcast a busy burst in the i-th minislot — S4

Transmitter buffer empty? — S5 (Yes / No)

Broadcast a busy burst in the i-th minislot — S6

## FIG 20

2020    2030

2010

2000

FIG21

Idle Slot
Transmission
Tx Cancelled
Reception

No Busy burst
Busy burst

Transmission
Interference
Busy burst hearability

Tx₁
Rx₁
Tx₂
Tx₃

2120
2130 2140

Frame *i*   Frame *i+1*   Frame *i+2*   time

Time Slot

2100
2110

EP 1 855 423 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004100461 A1
- EP 1628446 A1
- EP 1526685 A1
- EP 1289179 A1

**Non-patent literature cited in the description**

- **OMIYI P. et al.** Maximising spectral efficiency in 4th generation OFDM/TDMA TDD hybrid cellular mobile /ad-hoc wireless communications. *VTC-Spring,* 2004